# EUROPÄISCHE PATENTANMELDUNG

(11) **EP 4 187 194 A1**
(43) Veröffentlichungstag der Anmeldung: **31.05.2023**
(21) Anmeldenummer: 22209339.5
(22) Anmeldetag: 24.11.2022
(51) Int. Cl.: G01B 5/14, G01B 21/16

(54) **MESSVORRICHTUNG ZUM MESSEN EINER DISTANZÄNDERUNG**

(30) Priorität: 25.11.2021 AT 509452021
(71) Anmelder: Hössl, Bernhard, 2721 Bad Fischau-Brunn (AT)
(72) Erfinder: Hössl, Bernhard, 2721 Bad Fischau-Brunn (AT)
(74) Vertreter: Beer & Partner Patentanwälte KG

(57) **Zusammenfassung**

Eine Messvorrichtung (1) zum Messen einer Distanzänderung (ΔD) zwischen einer ersten Referenzstelle (7) und einer zweiten Referenzstelle (8) weist wenigstens eine Wegmesseinrichtung (2) auf. Die Wegmesseinrichtung (2) weist einen Bügel (3) mit einer ersten Aufhängung (4), die mit der ersten Referenzstelle (7) verbindbar ist, mit einer zweiten Aufhängung (5), die mit der zweiten Referenzstelle (8) verbindbar ist, und mit einem zwischen den Aufhängungen (4, 5) verlaufenden, elastischen Federabschnitt (12) auf. Der Federabschnitt (12) ist im unbelasteten Zustand gebogen. Am gebogenen Federabschnitt (12) ist wenigstens ein Dehnmessstreifen (14) angeordnet.

## Beschreibung

Die Erfindung betrifft eine Messvorrichtung zum Messen einer Distanzänderung zwischen einer ersten Referenzstelle und einer zweiten Referenzstelle mit wenigstens einer Wegmesseinrichtung und ein Fahrzeug mit einer derartigen Messvorrichtung.

Es gibt zahlreiche technische Anwendungen, bei denen es notwendig ist, die Distanzänderung zwischen zwei vorbestimmten Referenzstellen zu bestimmen. Aus dem Stand der Technik sind daher bereits unterschiedliche Typen von Messvorrichtungen bekannt, mit denen eine dynamische Distanzmessung möglich ist.

Viele dieser Messeinrichtungen sind für spezielle Anwendungszwecke optimiert und weisen eine hohe Präzision, Abtastfrequenz und/oder Langlebigkeit auf.

Für andere Einsatzgebiete wiederum werden Messvorrichtungen zum Messen von Distanzänderungen benötigt, die besonders robust gegenüber Umwelteinflüssen und Belastungen sind. Ein Beispiel für einen derartigen Anwendungsfall ist der Einsatz einer Messvorrichtung an bzw. in einem geländegängigen Fahrzeug.

Geländegängige Fahrzeuge, wie beispielsweise geländegängige Lastkraftwagen, weisen in der Regel ein biegesteifes aber verwindungsweiches Fahrgestell auf.

Insbesondere bei wiederholtem Überfahren von besonders hohen oder tiefen Hindernissen bzw. beim Durchfahren eines besonders unebenen Geländes kann die Beanspruchung im Fahrgestell, im Zwischenrahmen und/oder im Fahrzeugaufbau jedoch so groß werden, dass das Fahrzeug bleibende Schäden davonträgt.

Um dem vorzubeugen, ist es bei geländegängigen Fahrzeugen bekannt, Messvorrichtungen vorzusehen, mit denen für die Haltbarkeit und Lebensdauer des geländegängigen Fahrzeuges wichtige Parameter, aus denen die Fahrgestellverdrehung abgeleitet werden kann, erfasst werden.

Nachteilig an den bekannten Messvorrichtungen für geländegängige Fahrzeuge ist aber, dass diese oft nicht robust genug sind und/oder nur schwer nachgerüstet werden können. Weiters weisen herkömmliche, mit Messeinrichtungen zum Erfassen der Fahrgestellverdrehung ausgestattete, Fahrzeuge in der Regel einen komplizierten Aufbau auf bzw. laufen leicht Gefahr, dass an der Messvorrichtung Fehler bzw. Schäden auftreten, sodass sich die Verdrehung des Fahrgestells oft nicht mit hoher Sicherheit überwachen lässt.

Der Erfindung liegt daher die Aufgabe zu Grunde, eine Messeinrichtung der eingangs genannten Gattung bzw. ein Fahrzeug mit einer derartigen Messeinrichtung zur Verfügung zu stellen, die bzw. das die angesprochenen Probleme so weit wie möglich vermeidet. Insbesondere soll eine Messeinrichtung bereitgestellt werden, die besonders robust gegenüber Umwelteinflüssen, wartungsarm und trotzdem präzise ist, sodass bei einem damit ausgestatteten Fahrzeug das Erfassen der Verdrehung des Fahrzeugrahmens möglichst zuverlässig und dauerhaft möglich ist.

Gelöst wird diese Aufgabe erfindungsgemäß mit einer Messvorrichtung, die die Merkmale von Anspruch 1 aufweist.

Gelöst wird diese Aufgabe erfindungsgemäß des Weiteren mit einem Fahrzeug mit den Merkmalen von Anspruch 11, einem Fahrzeug mit den Merkmalen von Anspruch 12, einem Fahrzeug mit den Merkmalen von Anspruch 13 und einem Fahrzeug mit den Merkmalen von Anspruch 14.

Bevorzugte und vorteilhafte Ausführungsformen der Erfindung sind Gegenstand der Unteransprüche.

Erfindungsgemäß ist vorgesehen, dass die Wegmesseinrichtung einen Bügel mit einer ersten Aufhängung, die mit der ersten Referenzstelle verbindbar ist, mit einer zweiten Aufhängung, die mit der zweiten Referenzstelle verbindbar ist, und mit einem zwischen den Aufhängungen verlaufenden, elastischen Federabschnitt aufweist, dass der Federabschnitt im unbelasteten Zustand gebogen ist, und dass am gebogenen Federabschnitt wenigstens ein Dehnmessstreifen angeordnet ist.

Die erfindungsgemäße Messvorrichtung benötigt nur wenige Komponenten, die überdies äußerst robust sind und dennoch eine präzise Messung ermöglichen. Sie ist besonders zuverlässig, langlebig und wartungsarm. Daher eignet sie sich hervorragend für den Einsatz in geländegängigen Fahrzeugen, insbesondere für die Bestimmung der Verdrehung des Fahrgestells.

Ein weiterer Vorteil der erfindungsgemäßen Messvorrichtung liegt darin, dass die Applikation des bzw. der für die Messung verwendeten Dehnmessstreifen/s nicht vor Ort am Fahrzeug selbst, sondern bereits im Vorfeld sattfindet. Die Vorrichtung, die wesentlich größer als ein einzelner Dehnmessstreifen ist, kann auch an schwer zugänglichen Stellen, beispielsweise mittels Schrauben, äußerst präzise angeordnet und ausgerichtet werden, was mit einem im Verhältnis dazu sehr viel kleineren Dehnmessstreifen nicht so einfach möglich ist.

Auch der Austausch der Messeinrichtung bei einem defekten Dehnmessstreifen ist wesentlich einfacher und zeitsparender als der Austausch eines einzelnen, direkt am Fahrzeug applizierten, Dehnmessstreifens, sodass das Fahrzeug rasch wieder einsatzfähig ist und lange Steh- bzw. Stillstandzeiten vermieden werden können.

Weiters weisen die Komponenten der erfindungsgemäßen Messvorrichtung ein weitaus geringeres Gewicht auf als die Komponenten vergleichbarer, herkömmlicher Messvorrichtungen, wie beispielsweise induktiver Wegaufnehmer. Die erfindungsgemäße Messvorrichtung eignet sich daher besonders gut für den Einsatz in Anwendungsbereichen, in denen das Gewicht einzelner Bauteile und Bauteilgruppen möglichst gering gehalten werden soll, wie beispielsweise der Luft- oder Raumfahrt. Aufgrund des geringen Gewichtes der Komponenten der erfindungsgemäßen Messvorrichtung können Messungen vorgenommen werden, ohne im Wesentlichen das zu messende System zu beeinflussen. Beispielsweise können Schwingungen aufgezeichnet werden, ohne das zu messende System zu "verstimmen".

Da der Bügel der erfindungsgemäßen Messvorrichtung einen elastischen, im unbelasteten Zustand gebogenen Federabschnitt aufweist, wirkt der Bügel selbst wie eine Feder. Wenn der Bügel bei leichtgängigen Mechanismen zum Einsatz kommt, hilft er dabei, die zwei Bauteile bzw. Bauteilgruppen, zwischen denen die Distanzänderung gemessen werden soll, nach einer derartigen Distanzänderung wieder in ihre ursprüngliche Position zurückzuführen. Auf den Einsatz weiterer, diesen Zweck erfüllender Federn kann daher eventuell verzichtet werden.

Der Bügel kann vorzugsweise sowohl positive als auch negative Distanzänderungen zwischen den Referenzstellen bzw. den Aufhängungen messen, d.h. sowohl eine Verringerung als auch eine Vergrößerung der Distanz zwischen den Referenzstellen bzw. den Aufhängungen, und wirkt daher wie eine bidirektionale Feder.

Die erfindungsgemäße Messvorrichtung kann je nach Ausführungsform des Bügels besonders flach sein und auch bei beengten Platzverhältnissen zum Einsatz kommen.

Als Verdrehung wird im Rahmen der Erfindung ein Verwinden bzw. eine Torsion (insbesondere des Fahrgestells eines Fahrzeuges um seine Längsachse) verstanden.

Die erfindungsgemäße Messvorrichtung kann auch in anderen technischen Einsatzgebieten Verwendung finden, insbesondere in solchen, in denen Messvorrichtungen zum Messen einer Distanzänderung hohen Belastungen und widrigen Umwelteinflüssen ausgesetzt sind oder auch bei beengten Platzverhältnissen. Wenn die Messvorrichtung in Folge nur in Kombination mit einem geländegängigen Fahrzeug beschrieben ist, ist dies nicht als Einschränkung des Anwendungsgebietes aufzufassen, da die erfindungsgemäße Messeinrichtung - wiederum nicht einschränkend - ebenso bei Wasserfahrzeugen, Luftfahrzeugen, Raumfahrzeugen, Baumaschinen, Fördermaschinen, im Außeneinsatz an Bauwerken, etc. eingesetzt werden kann.

Aufgrund der im unbelasteten Zustand gebogenen Form des Federabschnittes ist die Distanz zwischen den Aufhängungen des unbelasteten Bügels geringer als die Länge des Federabschnittes. Diese Divergenz kann beispielsweise erreicht werden, indem der Federabschnitt eine einfach oder mehrfach gekrümmte Form, wie beispielsweise eine Ω-Form, eine S-Form, eine U-Form, eine O-Form oder eine C-Form aufweist. Ebenso ist es im Rahmen der Erfindung möglich, dass der Federabschnitt einfach oder mehrfach abgewinkelt ist und beispielsweis eine V-Form oder ]-Form aufweist. Da die Winkel eines derartigen Federabschnittes bei der erfindungsgemäßen Messvorrichtung (geringe) Biegeradien aufweisen, ist der Federabschnitt ebenfalls als gebogen anzusehen. Der Federabschnitt kann auch in sich verschränkt bzw. verschachtelt sein.

Beim Auseinanderbewegen der Aufhängungen, d.h. bei einer Vergrößerung der Distanz zwischen den Aufhängungen, wird zumindest bereichsweise die Krümmung des gebogenen Federabschnittes verringert. Beim Aufeinanderzubewegen der Aufhängungen, d.h. bei einer Verringerung der Distanz zwischen den Aufhängungen, wird hingegen zumindest bereichsweise die Krümmung des gebogenen Federabschnittes vergrößert. Gleichsam werden im unbelasteten Zustand des Bügels gerade verlaufende Abschnitte beim Auseinanderbewegen bzw. Aufeinanderzubewegen der Aufhängungen gekrümmt.

Der Federabschnitt ist derart elastisch, dass eine Distanzänderung zwischen den Aufhängungen zerstörungsfrei und ohne plastisches Verformen des Bügels möglich ist.

Im Rahmen der Erfindung ist vorzugsweise am gebogenen Federabschnitt wenigstens ein weiterer Dehnmessstreifen (kurz: DMS) angeordnet. Mehrere DMS helfen dabei, ein präzises und von Umwelteinflüssen, beispielsweise der Temperatur, unabhängiges Messergebnis zu erhalten.

Die gegenständliche Erfindung funktioniert jedoch auch, wenn nur ein einzelner DMS am gebogenen Federabschnitt des Bügels angeordnet ist. In diesem Fall ist der einzelne DMS vorzugsweise mit drei Präzisionswiderständen in einer Vollbrücke (Wheatstonesche Messbrücke) geschaltet.

Wenn in Folge auf einen einzelnen DMS bzw. eine Ausführungsform der Messvorrichtung mit einem einzelnen DMS Bezug genommen wird, können die diesbezüglichen Ausführungen für den Fall, dass die Messvorrichtung mehr als einen DMS aufweist, im Rahmen der Erfindung auch für alle DMS oder für einige der DMS bzw. für die Messvorrichtung mit mehr als einem DMS gelten.

Der DMS ist am gebogenen Federabschnitt angeklebt. Insbesondere ist der DMS bzw. wenigstens einer der DMS an einer konvex oder an einer konkav gekrümmten Seitenfläche des Federabschnittes angeordnet.

Im Rahmen der Erfindung ist eine Ausführungsform bevorzugt, bei der der Bügel im unbelasteten Zustand eine im Wesentlichen Ωförmige, U-förmige, C-förmige, V-förmige, ]-förmige, O-förmige oder S-förmige Gestalt aufweist. Mit einem derartig geformten Bügel kann eine besonders große Distanzänderung gemessen werden.

Der Federabschnitt des Bügels weist im unbelasteten Zustand einen Krümmungsabschnitt (beispielsweise bei U-förmiger Gestalt des Bügels) oder auch mehrere, insbesondere zwei, Krümmungsabschnitte (beispielsweise bei S-förmiger Gestalt des Bügels) oder drei Krümmungsabschnitte (beispielsweise bei Ωförmiger Gestalt des Bügels) auf.

Bei einem Bügel mit mehreren Krümmungsabschnitten kann zumindest zwischen zwei der aufeinanderfolgenden Krümmungsabschnitte (aber auch zwischen mehr als zwei der aufeinanderfolgenden Krümmungsabschnitte) jeweils ein gerader Abschnitt ausgebildet sein. Ebenso kann direkt an eine oder jede der Aufhängungen des Bügels ein Krümmungsabschnitt oder ein gerader Abschnitt anschließen.

Der DMS ist vorzugsweise in einem Krümmungsabschnitt des Federabschnittes am Bügel angeordnet, kann aber auch in einem geraden Abschnitt des Federabschnittes am Bügel angeordnet sein. Der Federabschnitt wird im Rahmen der Erfindung als im unbelasteten Zustand gebogener Federabschnitt angesehen, wenn er zumindest einen Krümmungsabschnitt (worunter auch ein abgewinkelter Abschnitt fällt) aufweist, auch wenn er abschnittsweise gerade Abschnitte aufweist.

Bei erfindungsgemäßen Ausführungsformen des Bügels mit Ωförmiger Gestalt, d.h. mit drei Krümmungsabschnitten, ist beispielswese die Bogenlänge des ersten und des dritten Krümmungsabschnittes kleiner als ein Viertelkreis und die Bogenlänge des zweiten Krümmungsabschnittes kleiner als ein Halbkreis. Möglich ist jedoch auch, dass die Bogenlänge des ersten und des dritten Krümmungsabschnittes kleiner als ein Halbkreis und die Bogenlänge des zweiten Krümmungsabschnittes kleiner als ein ganzer Kreis ist.

Insbesondere weist der Federabschnitt des Bügels der erfindungsgemäßen Messvorrichtung drei direkt aufeinanderfolgende Teilabschnitte mit jeweils einem Krümmungsabschnitt oder mehreren Krümmungsabschnitten auf. Die Teilabschnitte unterscheiden sich darin, dass der im ersten und im dritten Teilabschnitt angeordnete Krümmungsabschnitt bzw. falls vorhanden, alle im ersten und alle im dritten Teilabschnitt angeordneten Krümmungsabschnitte in eine (d.h. die gleiche) Richtung gebogen ist/sind, und der im zweiten (d.h. dem zwischen den anderen beiden Teilabschnitten angeordneten) Teilabschnitt angeordnete Krümmungsabschnitt bzw. falls vorhanden, alle im zweiten Teilabschnitt angeordneten Krümmungsabschnitte, in die andere Richtung gebogen ist/sind. Die Teilabschnitte weisen somit alternierend gebogene Krümmungsabschnitte auf, wobei in Teilabschnitten mit mehreren, z.B. durch gerade Abschnitte voneinander getrennten, Krümmungsabschnitten alle diese Krümmungsabschnitte in die selbe Richtung gebogen sind.

Im Rahmen der Erfindung sind auch Bügel denkbar, die direkt anschließend an die drei Teilabschnitte mit alternierend gebogenen Krümmungsabschnitten weitere Teilabschnitte mit alternierend gebogenen Krümmungsabschnitten aufweisen.

Der Bügel kann über seine gesamte Länge im Wesentlichen gleichbleibend stark bzw. dick und gleichbleibend breit sein. Im Rahmen der Erfindung sind jedoch auch Bügel denkbar, die in einem oder mehreren Abschnitt/en weniger stark bzw. dünner oder schmäler ausgeführt sind.

Ebenso ist es denkbar, dass der Bügel in einem oder mehreren Abschnitt/en gelocht oder geschlitzt ist, d.h. eine oder mehrere sich im Wesentlichen in Richtung einer Längserstreckung des Bügels erstreckende Längsöffnung/en aufweist. In Bereichen mit derartigen Längsöffnungen verlaufen demnach zwei schmälere Bügelabschnitte parallel zueinander und in Längsrichtung nebeneinander. Derartige Längsöffnungen können auch ausgehend von oder bis zu einer Aufhängung des Bügels verlaufen, sodass der Bügel in einem der oder beiden der direkt an die Aufhängungen anschließenden Abschnitte zweigeteilt sein kann, d.h. zwei parallel zueinander verlaufende Bügelteile (Zungen) aufweisen kann.

Denkbar sind beispielsweise Ausführungsformen, bei denen wenigstens ein Abschnitt des Bügels schmäler ausgeführt ist und zumindest bereichsweise in einer Längsöffnung des Bügels angeordnet ist bzw. verläuft oder durch diese geführt ist.

Vorzugsweise ist der Bügel einstückig gefertigt. Er kann im Rahmen der Erfindung jedoch auch aus mehreren miteinander verbundenen Teilstücken zusammengesetzt sein. Diese Teilstücke können gelenkig, z.B. über ein Scharnier, oder fest, z.B. verschraubt, verklebt oder vernietet, miteinander verbunden sein. Wenigstens eines der Teilstücke kann aus einem anderen Material mit anderen Eigenschaften bestehen als die anderen der Teilstücke (bzw. als das andere Teilstück), und insbesondere einen anderen E-Modul aufweisen. Beispielsweise ist eine Feder denkbar, bei der ein Teilstück aus Federstahl besteht und die anderen Teilstücke aus Kunststoff.

Im Rahmen der Erfindung kann ein Teilabschnitt bzw. können Teilabschnitte des Bügels auch in Längsrichtung verdreht sein, sodass der/die Abschnitt/e einer Schraubenlinie (Helix) folgt/folgen.

Insbesondere besteht beim Bügel der erfindungsgemäßen Messvorrichtung ein linearer Zusammenhang zwischen der Distanzänderung zwischen den Aufhängungen (d.h. der Distanzänderung zwischen den Referenzstellen) und der Beanspruchung des Bügels (z.B. Dehnung der Randfaser) wenigstens in jenem Bereich des Federabschnittes des Bügels, in dem der DMS angeordnet ist.

Im Rahmen der Erfindung kann die erste Aufhängung mit einem Verbindungselement verbunden sein, das mit der ersten Referenzstelle verbindbar ist, sodass die erste Aufhängung indirekt mit der ersten Referenzstelle verbunden ist. Mit einer derartigen Ausführungsform lässt sich die Änderung der Distanz zwischen zwei Referenzstellen messen, die weiter voneinander entfernt sind. Das Verbindungselement kann beispielsweise ein starrer oder elastischer Schieber, eine Leiste, eine Stange oder auch ein Seil, insbesondere Drahtseil, sein. Bevorzugt ist das Verbindungselement in diesem Fall ein Zugelement, wodurch die Montage vereinfacht wird.

Im Rahmen der Erfindung sind Ausführungsformen möglich, bei denen die Wegmesseinrichtung in einem Gehäuse angeordnet ist. Dabei ist der Bügel wenigstens abschnittsweise in dem Gehäuse aufgenommen und über die zweite Aufhängung mit dem Gehäuse verbunden. Das Gehäuse ist mit der zweiten Referenzstelle verbindbar, sodass die zweite Aufhängung indirekt mit der zweiten Referenzstelle verbunden ist. Ein derartiges Gehäuse schützt die darin angeordneten Bestandteile der Messeinrichtung ganz allgemein vor durch Einwirkung von außen verursachten Schäden, insbesondere vor Beschädigungen durch Steine, Äste, Erdbrocken usw.

Das Gehäuse kann flexibel ausgeführt sein und weist beispielsweise die Form eines elastischen Schlauches, eines Gewebeschlauches, eines elastischen Faltenbalges oder einer Schleppkette auf. Bei diesen Ausführungsformen ummantelt das Gehäuse im Wesentlichen den Bügel. Insbesondere jedoch kann das Gehäuse starr ausgeführt sein und beispielsweise eine einfach oder mehrfach geteilte Form aufweisen und aus starr miteinander verbundenen, ineinander verschiebbaren und/oder zueinander verschwenkbaren Bestandteilen bestehen. Die Spange kann zur Gänze oder auch nur teilweise in dem Gehäuse eingeschlossen bzw. von diesem ummantelt sein.

Vorzugsweise ist bei einer Ausführungsform mit Gehäuse der Bügel vollständig im Gehäuse aufgenommen und über ein Verbindungselement, das abschnittsweise aus dem Gehäuse hinausragt, mit der ersten Aufhängung verbunden. Denkbar ist jedoch auch eine Ausführungsform, bei der der Bügel selbst einen verlängerten, insbesondere stabförmigen, Abschnitt aufweist, der aus dem Gehäuse hinausragt.

In einer vorteilhaften Weiterbildungsform ist der Bügel vollständig im Gehäuse aufgenommen und ein Innenraum des Gehäuses nach außen hin schmutzdicht abgeschlossen. Zwischen dem Verbindungselement und einer Öffnung im Gehäuse, durch die das Verbindungselement ragt, ist eine Dichtung angeordnet. Bei einer derartigen Weiterbildungsform sind die im Gehäuse aufgenommenen Bestandteile zusätzlich gegen das Anhaften von Schmutz geschützt, der das Messergebnis verfälschen könnte. Das Gehäuse ist vorzugsweise zumindest spritzwasserdicht, insbesondere vollständig wasserdicht, ausgeführt, sodass die darin enthaltenden Komponenten auch gegen Korrosion geschützt sind.

Denkbar, wenn auch nicht bevorzugt, ist eine Ausführungsform ähnlich der vorstehend beschriebenen Ausführungsform, bei der der Innenraum des Gehäuses nach außen hin ebenfalls schmutzdicht abgeschlossen ist und bei der der Bügel einen wie vorhergehend beschriebenen, stabförmigen Abschnitt aufweist. Bei dieser Ausführungsform ist die Dichtung zwischen dem stabförmigen Abschnitt des Bügels und der Öffnung im Gehäuse, durch die der stabförmige Abschnitt ragt, angeordnet.

Im Rahmen der Erfindung kann vorgesehen sein, dass der Dehnmessstreifen zwischen dem Federabschnitt und einer Schutzschicht angeordnet ist. Die Schutzschicht besteht vorzugsweise aus einem wasserdichten Kunststoff, beispielsweise Butylgummi. Die Schutzschicht kann erzeugt werden, indem eine ausreichend große Menge an aushärtendem Klebstoff über dem DMS aufgebracht wird. Die Schutzschicht umschließt den DMS von allen Seiten (abgesehen von der Seite, die auf dem Federabschnitt angeklebt ist), wobei nur die elektrischen Leiter des DMS aus der Schutzschicht hinausführen. Durch die Schutzschicht ist der DMS vor Umwelteinflüssen, insbesondere Feuchtigkeit, geschützt.

In einer bevorzugten Ausführungsform ist der Bügel als Blattfeder ausgeführt, wobei die Aufhängungen vorzugsweise als gerollte bzw. gebogene Federaugen oder mit Durchgangslöchern, insbesondere Bohrungen, ausgeführt sind. Ein derartig geformter Bügel weist ein besonders günstiges elastisches Verhalten auf. Denkbar, wenn auch nicht bevorzugt, ist, dass der Bügel einen anderen Querschnitt als den eines schmalen Rechteckes, beispielsweise einen quadratischen Querschnitt, aufweist.

Jede der Aufhängungen kann fest mit der jeweiligen Referenzstelle bzw. ggf. dem Verbindungselement verbunden sein. Vorzugsweise ist jede der Aufhängungen jedoch gelenkig (um eine, zwei oder drei Achsen verdrehbar) mit der jeweiligen Referenzstelle bzw. ggf. dem Verbindungselement verbunden, beispielsweise über ein Scharniergelenk oder ein Kugelgelenk. Bei einem vorhandenen Verbindungselement kann auch das Verbindungselement fest oder gelenkig (um eine, zwei oder drei Achsen verdrehbar) mit der jeweiligen Referenzstelle verbunden sein.

In einer besonders vorteilhaften Ausführungsform ist vorgesehen, dass am gebogenen Federabschnitt wenigstens ein weiterer Dehnmessstreifen, vorzugsweise mehr als ein weiterer Dehnmessstreifen, angeordnet ist/sind. Der bzw. die weiteren DMS können auf derselben Seitenfläche des Bügels bzw. im Bereich des ersten DMS, aber auch an anderen Seitenflächen bzw. vom ersten DMS entfernt angeordnet sein. Die Verwendung mehrerer DMS erhöht die Präzision der Messung und hilft dabei, Umwelteinflüsse, wie Temperaturschwankungen, zu eliminieren.

Besonders bevorzugt ist, wenn die Messvorrichtung eine mit der Wegmesseinrichtung verbundene Steuerung aufweist, die derart eingerichtet ist, dass sie den oder die Dehnmessstreifen mit einer Messspannung versorgt und eine Widerstandsänderung des oder der Dehnmessstreifen erfasst. Die mit der Steuereinrichtung ermittelten Daten können an eine mit der Steuerung verbundene Ausgabeeinrichtung und/oder Sendeeinrichtung der Messvorrichtung weitergeleitet werden. Die Steuerung ist beispielsweise ein Computer.

Die Ausgabeeinrichtung kann die ermittelten Daten oder davon abgeleitete Daten optisch darstellen, z.B. als Zahlenwerte auf einem Display oder einem Monitor, mithilfe eines Ampelsystems, über ein skaliertes Zifferblatt mit Nadel, usw. Die ermittelten Daten oder davon abgeleitete Daten können jedoch auch akustisch, z.B. in Form einer Ansage, wiedergeben werden. Zusätzlich dazu oder stattdessen kann bei Überschreitung eines bestimmten Grenzwertes ein optisches Signal, z.B. ein Warnblinken, ein akustisches Signal, z.B. ein Warnsignal, oder ein haptisches Signal, z.B. durch ein vibrierendes Lenkrad, aus- bzw. abgeben werden.

Die Sendeeinrichtung kann dazu eingerichtet sein, die ermittelten Daten bzw. davon abgeleitete Daten an ein Empfangsgerät, z.B. ein Mobiltelefon mit einer dafür vorgesehenen Applikation, zu übermitteln. Denkbar ist auch, dass ein im Fahrzeug installiertes Ausgabegerät die Daten von der mit der Steuerung verbundenen Sendeeinrichtung empfängt.

Der Bügel der Wegmesseinrichtung der erfindungsgemäßen Messvorrichtung kann metallisch, beispielsweise aus Stahl, Aluminium, Messing, Titan oder einer Metalllegierung, aber auch nichtmetallisch, beispielsweise aus CFK oder GFK, sein. Wenn der Bügel aus Metall, insbesondere einem anderen Metall als Stahl wie beispielsweise Aluminium, gefertigt ist, sind die Aufhängungen vorzugsweise elektrochemisch von den Referenzstellen entkoppelt. In Ausführungsformen, bei denen der Bügel die Form einer Blattfeder aufweist, sind beispielsweise in den gebogenen Federaugen oder in den Durchgangslöchern an den Enden Kunststoffbuchsen angeordnet. Die elektrochemische Entkopplung kann auch dadurch erreicht werden, dass der Bügel in einem Gehäuse, insbesondere aus Kunststoff, aufgenommen ist.

Im Rahmen der Erfindung kann die Wegmesseinrichtung zusätzlich zu dem Bügel noch weitere Bügel aufweisen bzw. kann der Bügel der Wegmesseinrichtung aus mehreren miteinander verbundenen Einzelbügeln bestehen.

Beispielsweise können bei einer Wegmesseinrichtung zwei ident geformte Bügel nebeneinander angeordnet und an ihren Aufhängungen miteinander verbunden sein, sodass die Bügel beim Messen der Distanzänderung parallel zueinander und im gleichen Ausmaß verbogen werden. Eine derartige Wegmesseinrichtung ist weniger störanfällig. Denkbar ist im Rahmen der Erfindung auch, dass bei einer Anordnung mit zwei parallelen Bügeln unterschiedlich geformte Bügel verwendet werden, solange der Abstand der Aufhängungen der Bügel im unbelasteten Zustand gleich groß ist. Mit derartigen Wegmesseinrichtungen können Umweltfaktoren besser kompensiert werden.

Ebenso möglich ist es im Rahmen der Erfindung, dass der Bügel aus zwei oder mehr als zwei miteinander verbundenen Einzelbügeln zusammengesetzt ist, die vorzugsweise jeweils für sich selbst genommen ein Merkmal oder mehrere Merkmale des bereits beschriebenen Bügels aufweisen. Die Einzelbügel sind "in Serie" miteinander verbunden, d.h. dass jeder Einzelbügel mit jedem benachbarten Einzelbügel an einer seiner Aufhängungen verbunden ist. Im Rahmen der Erfindung bilden die hintereinander gereihten und miteinander verbundenen Einzelbügel den Bügel der Wegmesseinrichtung. Sowohl der erste als auch der letzte der miteinander verbundenen Einzelbügel weist jeweils eine Aufhängung auf, die nicht mit einem anderen Einzelbügel verbunden ist. Diese Aufhängungen bilden daher die erste bzw. zweite Aufhängung des Bügels der Wegmesseinrichtung. Mit einem Bügel aus derart (in Serie) aneinandergereihten Einzelbügeln kann eine sehr große Distanzänderung bzw. eine Distanzänderung zwischen zwei relativ weit voneinander beabstandeten Referenzstellen gemessen werden.

Die Erfindung betrifft weiters ein Fahrzeug, insbesondere einen Lastkraftwagen, mit einer Längsachse. Das Fahrzeug weist ein um die Längsachse verdrehbares Fahrgestell und eine am Fahrgestell gelagerte, im Wesentlichen drehsteife, Auflagekonstruktion auf. Die Auflagekonstruktion ist in Richtung der Längsachse gesehen an einem vorderen oder hinteren Ende fest mit dem Fahrgestell verbunden. Das Fahrgestell weist eine Referenzstelle und die Auflagekonstruktion eine weitere Referenzstelle auf, wobei sich die Referenzstellen bei einer Verdrehung des Fahrgestells, insbesondere um die Längsachse, voneinander weg und/oder aufeinander zu bewegen. Weiters weist das Fahrzeug eine Messvorrichtung mit wenigstens einer Wegmesseinrichtung auf, die mit der Referenzstelle des Fahrgestells und der Referenzstelle der Auflagekonstruktion verbunden ist und mit der eine Distanzänderung zwischen den Referenzstellen messbar ist. Die Messvorrichtung ist eine Messvorrichtung nach einer der vorhergehend beschriebenen Ausführungsformen. Dabei ist die Referenzstelle des Fahrgestells die erste Referenzstelle und die Referenzstelle der Auflagekonstruktion die zweite Referenzstelle, oder umgekehrt.

Die Referenzstellen sind derart ausgewählt, dass aufgrund der Distanzänderung zwischen den Referenzstellen eine Verdrehung des Fahrgestells gegenüber der Auflagekonstruktion ermittelt werden kann. Da die Auflagekonstruktion im Wesentlichen drehsteif ausgeführt ist, und daher kaum bis gar nicht verdrehbar ist, gibt die Verdrehung des Fahrgestells gegenüber der Auflagekonstruktion Auskunft über das Ausmaß der Verdrehung des Fahrgestells.

Die Verdrehung des Fahrgestells um seine Längsachse ist im Betrieb des Fahrzeuges in der Regel um mehr als eine Größenordnung größer als die Verdrehung des Fahrgestells um eine Achse quer zu seiner Längsachse. Die erfindungsgemäße Messvorrichtung dient bei einem der erfindungsgemäßen Fahrzeuge im Wesentlichen dazu, die Verdrehung des Fahrgestells um seine Längsachse zu ermitteln. Es ist jedoch auch möglich mit der erfindungsgemäßen Messvorrichtung bei einem der erfindungsgemäßen Fahrzeuge die Verdrehung des Fahrgestells um eine Achse quer zu seiner Längsachse zu messen.

Im Rahmen der Erfindung ist die feste Verbindung zwischen der Auflagekonstruktion und dem Fahrgestell als fest im Sinne einer nicht möglichen Verdrehung um die Längsachse des Fahrgestells zu verstehen, d.h. dass die Auflagekonstruktion an jenem Ende, an dem die feste Verbindung besteht, an dieser Stelle nicht gegenüber dem Fahrgestell verdrehbar ist. Ein Verschwenken der Auflagekonstruktion gegenüber dem Fahrgestell um eine quer zur Längsachse ausgerichtete Schwenkachse kann bei einer derartigen Verbindung jedoch möglich sein, beispielsweise indem die feste Verbindung über ein Kipp- bzw. Schwenkgelenk ausgeführt ist. Die feste Verbindung kann im Rahmen der Erfindung auch vom vorderen oder hinteren Ende beabstandet angeordnet sein.

Die Auflagekonstruktion kann im Rahmen der Erfindung Teil einer Ladungs- bzw. Personentransporteinrichtung oder einer mobilen Wohneinrichtung, aber auch Teil einer Fahrkabine sein.

Im Rahmen der Erfindung verläuft der Bügel der Messvorrichtung vorzugsweise im Wesentlichen quer zur Längsachse, d.h. dass eine gedachte Verbindungslinie zwischen den Aufhängungen des Bügels, egal ob sie im Wesentlichen in vertikaler oder horizontaler Richtung verläuft, jedenfalls quer zur Längsachse des Fahrzeuges ausgerichtet ist.

Möglich ist im Rahmen der Erfindung eine Ausführungsform, bei der die Auflagekonstruktion an jenem Ende, das nicht fest mit dem Fahrgestell verbunden ist, gegenüber dem Fahrgestell beweglich gelagert ist. Eine derartige bewegliche Lagerung ist beispielsweise dann gegeben, wenn die Auflagekonstruktion an jenem Ende, das nicht fest mit dem Fahrgestell verbunden ist, über eine quer zur Längsachse gesehen mittig angeordnete Schwenklagerung, die ein Verschwenken des Fahrgestells gegenüber der Auflagekonstruktion um eine Schwenkachse parallel zur Längsachse des Fahrzeuges ermöglicht, beweglich (d.h. eben nicht fest) mit dem Fahrgestell verbunden ist. Die Schwenklagerung kann auch von ihrem jeweiligen Ende beabstandet angeordnet sein. Auch eine Lagerung, bei der die Auflagekonstruktion an ihrem jeweiligen Ende im Wesentlichen vom Fahrgestell abhebbar gelagert ist, ist im Rahmen der Erfindung denkbar.

Im Rahmen der Erfindung kann vorgesehen sein, dass die Referenzstelle der Auflagekonstruktion über, d.h. in vertikaler Richtung oberhalb, der Referenzstelle des Fahrgestells positioniert ist, wobei die Referenzstellen vorzugsweise in einem Seiten- oder Eckbereich, insbesondere an dem Ende der Auflagekonstruktion, das nicht fest mit dem Fahrgestell verbunden ist, positioniert sind. Eine derartige Anordnung ist besonders einfach zu realisieren, da Fahrzeuge in der Regel eine Vielzahl derart zueinander ausgerichteter Referenzstellen aufweisen können.

In einer alternativen Ausführungsform ist die Referenzstelle der Auflagekonstruktion an einem Vorsprung der Auflagekonstruktion, beispielsweise einem Stab, im Wesentlichen seitlich neben der Referenzstelle des Fahrgestells positioniert. Möglich ist im Rahmen der Erfindung auch, dass die Referenzstelle des Fahrgestells an einem Vorsprung des Fahrgestells im Wesentlichen seitlich der Referenzstelle der Auflagekonstruktion positioniert ist, oder dass beide Referenzstellen an jeweiligen Vorsprüngen des Fahrgestells und der Auflagekonstruktion positioniert sind. Der Vorsprung bzw. die Vorsprünge ist/sind bei nicht verdrehtem Fahrgestell vorzugsweise im Wesentlichen vertikal ausgerichtet. Bei einer derartigen Ausführungsform ist die Auflagekonstruktion bevorzugt über die bereits beschriebene Schwenklagerung mit dem Fahrgestell verbunden, wobei der Vorsprung bzw. die Vorsprünge im Bereich der Schwenklagerung angeordnet ist/sind. Vorteilhaft an dieser Ausführungsform ist, dass sich die Verdrehung des Fahrgestells mit Hilfe einer einzigen Wegmesseinrichtung besonders einfach ermitteln lässt.

Die Erfindung betrifft überdies ein weiteres, alternatives Fahrzeug, insbesondere einen Lastkraftwagen, mit einer Längsachse und einem um die Längsachse verdrehbaren Fahrgestell. Bei diesem Fahrzeug weist das Fahrgestell eine erste Referenzstelle und eine zweite Referenzstelle, die sich bei einer Verdrehung des Fahrgestells, insbesondere um die Längsachse, von der ersten Referenzstelle des Fahrgestells weg oder zu dieser hin bewegt, auf. Das Fahrzeug weist überdies eine Messvorrichtung mit wenigstens einer Wegmesseinrichtung auf, die mit den Referenzstellen des Fahrgestells verbunden ist und mit der eine Distanzänderung zwischen den Referenzstellen messbar ist. Die Messvorrichtung ist eine Messvorrichtung nach einer der vorangehend beschriebenen Ausführungsformen.

Die Erfindung betrifft noch ein weiteres, alternatives Fahrzeug, insbesondere einen Lastkraftwagen, mit einer Längsachse, einem um die Längsachse verdrehbaren Fahrgestell, einer fest mit dem Fahrgestell verbundenen Auflagekonstruktion und einer Fahrerkabine, der eine Vorderwand der Auflagekonstruktion zugewandt ist. Bei diesem Fahrzeug weist die Fahrerkabine eine Referenzstelle und die Auflagekonstruktion eine weitere Referenzstelle auf, die sich bei einer Verdrehung des Fahrgestells, insbesondere um die Längsachse, voneinander weg oder zueinander hin bewegen. Das Fahrzeug weist eine Messvorrichtung mit wenigstens einer Wegmesseinrichtung auf, die mit der Referenzstelle der Fahrerkabine und der Referenzstelle der Auflagekonstruktion verbunden ist und mit der eine Distanzänderung zwischen den Referenzstellen messbar ist. Die Messvorrichtung ist eine Messvorrichtung nach einer der vorangehend beschriebenen Ausführungsformen.

Die Erfindung betrifft auch ein Fahrzeug, insbesondere einen Lastkraftwagen, mit einer Längsachse, einem um die Längsachse verdrehbaren Fahrgestell und einer Fahrerkabine. Bei diesem Fahrzeug weist das Fahrgestell eine erste Referenzstelle auf, die sich bei einer Verdrehung des Fahrgestells, insbesondere um die Längsachse, von einer zweiten Referenzstelle der Fahrerkabine weg oder zu dieser hin bewegt. Das Fahrzeug weist eine Messvorrichtung mit wenigstens einer Wegmesseinrichtung auf, die mit den Referenzstellen des Fahrgestells und der Fahrerkabine verbunden ist und mit der eine Distanzänderung zwischen den Referenzstellen messbar ist. Die Messvorrichtung ist eine Messvorrichtung nach einer der vorangehend beschriebenen Ausführungsformen.

Die Referenzstellen sind bei allen erfindungsgemäßen Fahrzeugen derart gewählt, dass aufgrund der Distanzänderung zwischen den Referenzstellen eine Verdrehung des Fahrgestells, insbesondere die Verdrehung des Fahrgestells um seine Längsachse, aber auch die Verdrehung des Fahrzeuges um eine quer zu seiner Längsachse verlaufende Achse, ermittelt werden kann.

Vorteilhaft ist, wenn das erfindungsgemäße Fahrzeug eine Fahrerkabine und eine mit dem Fahrgestell verbundene Auflagekonstruktion aufweist, der Fahrerkabine eine Vorderwand der Auflagekonstruktion zugewandt ist, und an der Vorderwand eine, insbesondere im Wesentlichen horizontal verlaufende, Skala angebracht ist. Anhand dieser Skala kann die Verdrehung der mit dem Fahrgestell fest verbundenen Fahrerkabine im Verhältnis zur Auflagekonstruktion ermittelt werden, da abhängig vom Ausmaß der Verdrehung des Fahrgestells eine Seitenwand der Fahrerkabine mit einem unterschiedlichen Teilstrich der Skala fluchtet, was über den Seitenspiegel feststellbar ist. Alternativ dazu kann der Seitenspiegel auch eine Markierung aufweisen, die sich - abhängig vom Ausmaß der Verdrehung des Fahrgestells - in einem anderen Bereich der im Seitenspiegel sichtbaren Skala befindet.

Alternativ oder zusätzlich dazu kann eine weitere Skala an einer Seitenspiegelfläche aufgebracht sein, wobei die Verdrehung der Auflagekonstruktion gegenüber der Fahrerkabine aufgrund der Position der gespiegelten Seitenkante bzw. einer Markierung der Vorderwand auf der Skala im Seitenspiegel sichtbar ist.

Eine weitere im Rahmen der Erfindung denkbare Möglichkeit, die Verdrehung des Fahrgestells zu ermitteln, besteht darin, an der Fahrerkabine eine optische Einrichtung zum Erfassen einer seitlichen Verschiebung eines an der Vorderwand befindlichen Referenzpunktes gegenüber der Fahrerkabine anzuordnen. Dieser Referenzpunkt kann beispielsweise die Seitenkante der Vorderwand, ein Punkt darauf oder eine Markierung an der Vorderwand sein.

Die Skala und/oder die Markierung kann/können bei sämtlichen vorhergehend beschriebenen Ausführungsformen auf einem beheizten Trägerelement angeordnet und/oder beleuchtet und/oder selbstleuchtend sein. Die Skala und/oder die Markierung kann/können auch völlig unabhängig und losgelöst von der erfindungsgemäßen Messvorrichtung verwendet werden, um das Ausmaß der Verdrehung bzw. der Verwindung des Fahrgestells anzuzeigen.

Im Rahmen der Erfindung kann die im Fahrzeug eingebaute Messvorrichtung mehr als eine Wegmesseinrichtung, insbesondere zwei, drei oder vier Wegmesseinrichtungen, aufweisen. Vorzugsweise - aber nicht zwingend - sind diese im Wesentlichen gleich aufgebaut, wobei sich dies nur auf den grundsätzlichen Aufbau bezieht. Im Rahmen der Erfindung kann nämlich durchaus vorgesehen sein, dass alle oder zumindest manche der Wegmesseinrichtungen unterschiedlich groß bzw. unterschiedlich dimensioniert sind, d.h. Bügel mit unterschiedlich gebogenen bzw. unterschiedlich geformten Federabschnitten und/oder unterschiedlich weit beabstandete Aufhängungen im unbelasteten Zustand aufweisen. Auch hinsichtlich anderer vorstehend beschriebener Merkmale können sich einzelne Wegmesseinrichtungen von den anderen unterscheiden.

Die insbesondere mittige Anordnung einer einzelnen Wegmesseinrichtung andererseits hat den Vorteil, dass zusammen mit der Messvorrichtung ein Einkanalmessverstärker verwendet werden kann.

In manchen Ausführungsformen des Fahrzeugs können mehrere Messvorrichtungen vorteilhaft oder notwendig sein, um in allen Situationen die Verdrehung des Fahrgestells ermitteln zu können. Mehrere Wegmesseinrichtungen können aber auch als Sicherheit dienen, um ggf. den Ausfall einer einzelnen Wegmesseinrichtung zu kompensieren oder die Messgenauigkeit des Ausmaßes der Verdrehung des Fahrgestells zu erhöhen.

Bei Ausführungsformen mit mehreren Wegmesseinrichtungen können zumindest manche der Wegmesseinrichtungen parallel und/oder in Serie angeordnet sein. Bei paralleler Anordnung der Wegmesseinrichtungen sind diese im Wesentlichen nebeneinander verlaufend angeordnet, sodass beide Wegmesseinrichtungen die gleiche Distanzänderung messen. Eine derartige Anordnung kann die Störanfälligkeit der Messvorrichtung verringern. Bei einer Anordnung der Wegmesseinrichtungen in Serie sind die Wegmesseinrichtungen im Wesentlichen hintereinander und miteinander verbunden angeordnet, sodass die Distanzänderung zwischen den Referenzstellen von den miteinander verbundenen Wegmesseinrichtungen anteilig erfasst wird. Mit einer derartigen Anordnung können größere Distanzänderungen bzw. Distanzänderungen zwischen zwei relativ weit beabstandeten Referenzstellen gemessen werden.

Vorzugsweise weist die Messvorrichtung eine mit der Wegmesseinrichtung oder den Wegmesseinrichtungen verbundene Steuerung auf, die mit einem Datenspeicher verbunden ist, in dem Daten des Fahrzeugs d.h. Fahrzeugdaten bzw. -kennwerte, insbesondere Fahrgestelldaten bzw. -kennwerte hinterlegt sind. Die Steuerung ist derart eingerichtet, dass sie die von der Wegmesseinrichtung erfasste Distanzveränderung zwischen den Referenzstellen mit den hinterlegten Fahrzeugdaten vergleicht. Aus diesem Vergleich kann die Steuerung beispielsweise das Ausmaß der Verdrehung des Fahrgestells ermitteln. Die Steuerung kann zusätzlich mit weiteren Sensoren, wie beispielsweise anders aufgebauten Wegmesseinrichtungen, Temperatursensoren, Neigungssensoren, Beschleunigungssensoren, Geschwindigkeitssensoren usw., verbunden sein.

In einer vorteilhaften Ausführungsform des Fahrzeuges weist die Messvorrichtung eine mit der Steuerung verbundene Sendeeinrichtung auf, die dazu eingerichtet ist, Daten betreffend das Ausmaß der Verdrehung des Fahrgestells an wenigstens einen Empfänger zu übermitteln. Die Datenübertragung erfolgt dabei vorzugsweise drahtlos, beispielsweise mittels Bluetooth oder einer anderen Funktechnologie. Als Empfänger kann eine Ausgabeeinrichtung, wie sie nachfolgend beispielhaft beschrieben wird, aber auch ein mobiles Empfangsgerät, wie ein Mobiltelefon mit entsprechender Applikation, dienen.

Im Rahmen der Erfindung weist die Messvorrichtung vorzugsweise eine mit der Steuerung verbundene und/oder ggf. als Empfänger der Sendeeinrichtung wirkende Ausgabeeinrichtung auf. Diese Ausgabeeinrichtung ist dazu eingerichtet, wenigstens einen Kennwert der Verdrehung des Fahrgestells digital oder analog anzuzeigen und/oder bei Überschreitung eines vordefinierten Grenzwertes oder mehrerer vordefinierter Grenzwerte der Verdrehung ein optisches und/oder akustisches und/oder haptisches Signal aus- bzw. abzugeben. Hierzu wird auf die weiter oben beschriebenen Ausgabeeinrichtungen der Messvorrichtung verwiesen, da die Ausgabeeinrichtung des Fahrzeuges gleichzeitig die Ausgabeeinrichtung der Messvorrichtung sein bzw. die gleichen Merkmale aufweisen kann.

Die Messvorrichtung ist im Rahmen der Erfindung vorzugsweise derart angeordnet, dass damit eine Distanzänderung zwischen den Referenzstellen in vertikaler Richtung oder horizontaler Richtung messbar ist. Denkbar ist jedoch auch, dass mit der Messvorrichtung sowohl eine Distanzänderung zwischen den Referenzstellen in vertikaler Richtung als auch eine Distanzänderung zwischen den Referenzstellen in horizontaler Richtung messbar ist.

Denkbar ist im Rahmen der Erfindung auch eine Messvorrichtung, bei der die erste und/oder die zweite Aufhängung bereits wie eine Komponente eines Fahrzeuges, mit dem die Messvorrichtung verwendet werden soll, geformt ist. Beispielsweise kann die erste bzw. zweite Aufhängung die Form eines Stahlträgers, eines Verbindungselementes, einer Querverstrebung, usw. aufweisen. Bei einem Fahrzeug mit einer erfindungsgemäßen Messvorrichtung können Bauteile des Fahrzeuges, zwischen denen eine Referenzbewegung gemessen werden soll, monolithisch über den Bügel der Messvorrichtung miteinander verbunden sein. Diese Bauteile sind sowohl Bestandteil des Fahrzeuges als auch der Messvorrichtung. Auch Ausführungsformen, bei denen eine der Aufhängungen die Form eines Bauteiles eines Fahrzeuges aufweist und die andere Aufhängung zum Verbinden mit einem Bauteil eines Fahrzeuges ausgeführt ist, sind im Rahmen der Erfindung möglich.

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind. Es zeigt:
- Fig. 1: schematisch eine erfindungsgemäße Messvorrichtung,
- Fig. 2 bis 4: unterschiedliche Ausführungsformen von Bügeln einer Wegmesseinrichtung der erfindungsgemäßen Messvorrichtung,
- Fig. 5: eine Ausführungsform der Wegmesseinrichtung mit einem Gehäuse,
- Fig. 6: eine weitere Ausführungsform der Wegmesseinrichtung mit einer Schutzschicht,
- Fig. 7: ein Detail aus Fig. 6 in einer Schnittansicht,
- Fig. 8: ein erfindungsgemäßes Fahrzeug gemäß einer ersten Ausführungsform in einer isometrischen Ansicht,
- Fig. 9 und 10: vereinfachte Querschnitte durch das Fahrzeug aus Fig. 8,
- Fig. 11: das erfindungsgemäße Fahrzeug gemäß einer weiteren Ausführungsform in einer isometrischen Ansicht,
- Fig. 12: ein Detail aus Fig. 11,
- Fig. 13: einen vereinfachten Querschnitt durch das Fahrzeug aus Fig. 11,
- Fig. 14: einen weiteren vereinfachten Querschnitt durch das erfindungsgemäße Fahrzeug gemäß einer weiteren Ausführungsform,
- Fig. 15: das erfindungsgemäße Fahrzeug gemäß noch einer weiteren Ausführungsform in einer Vorderansicht,
- Fig. 16: ein Detail aus Fig. 15 gemäß noch einer weiteren Ausführungsform,
- Fig. 17: ein Detail aus Fig. 15 gemäß noch einer weiteren Ausführungsform,
- Fig. 18: einen Seitenspiegel des erfindungsgemäßen Fahrzeuges,
- Fig. 19: das erfindungsgemäße Fahrzeug gemäß noch einer weiteren Ausführungsform in einer isometrischen Ansicht,
- Fig. 20: das erfindungsgemäße Fahrzeug gemäß noch einer weiteren Ausführungsform in einer isometrischen Ansicht,
- Fig. 21: ein Detail aus Fig. 20,
- Fig. 22: einen vereinfachten Querschnitt durch das Fahrzeug gemäß Fig. 20,
- Fig. 23: eine vereinfachte Darstellung eines Bügels der Wegmesseinrichtung in einem belasteten und einem entlasteten Zustand,
- Fig. 24 bis 30: unterschiedliche, im Rahmen der Erfindung mögliche Ausführungsformen des Bügels, jeweils in einer isometrischen Ansicht, und
- Fig. 31 bis 41: weitere, im Rahmen der Erfindung mögliche, Ausführungsformen des Bügels, jeweils in einer isometrischen Ansicht.

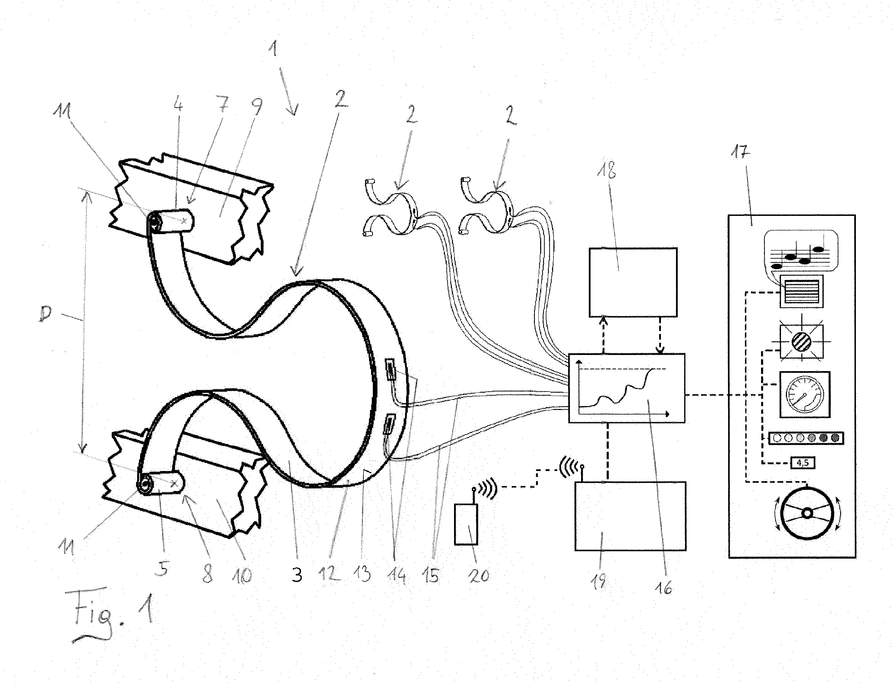

Fig. 1 zeigt eine erfindungsgemäße Messvorrichtung 1 in einer schematischen Ansicht. Die Messvorrichtung 1 weist wenigstens eine Wegmesseinrichtung 2 auf, die in Fig. 1 in einer isometrischen Ansicht und vergrößert dargestellt ist.

Die Wegmesseinrichtung 2 weist einen Bügel 3 mit einer ersten Aufhängung 4 an einem Ende und einer zweiten Aufhängung 5 am anderen Ende auf. In der dargestellten Ausführungsform hat der Bügel 3 die Form einer Blattfeder und die Aufhängungen 4, 5 sind als gerollte Federaugen ausgebildet.

Die erste Aufhängung 4 ist mit einer ersten Referenzstelle 7 und die zweite Aufhängung 5 mit einer zweiten Referenzstelle 8 verbunden.

In der dargestellten Ausführungsform befindet sich die erste Referenzstelle 7 auf einem Trägerabschnitt 9 und die zweite Referenzstelle 8 auf einem Trägerabschnitt 10, wobei die Trägerabschnitte 9, 10 zur besseren Veranschaulichung freigeschnitten dargestellt sind. Die als Federaugen ausgeführten Aufhängungen 4, 5 sind über Stifte 11 schwenkbar mit den Referenzstellen 7, 8 verbunden.

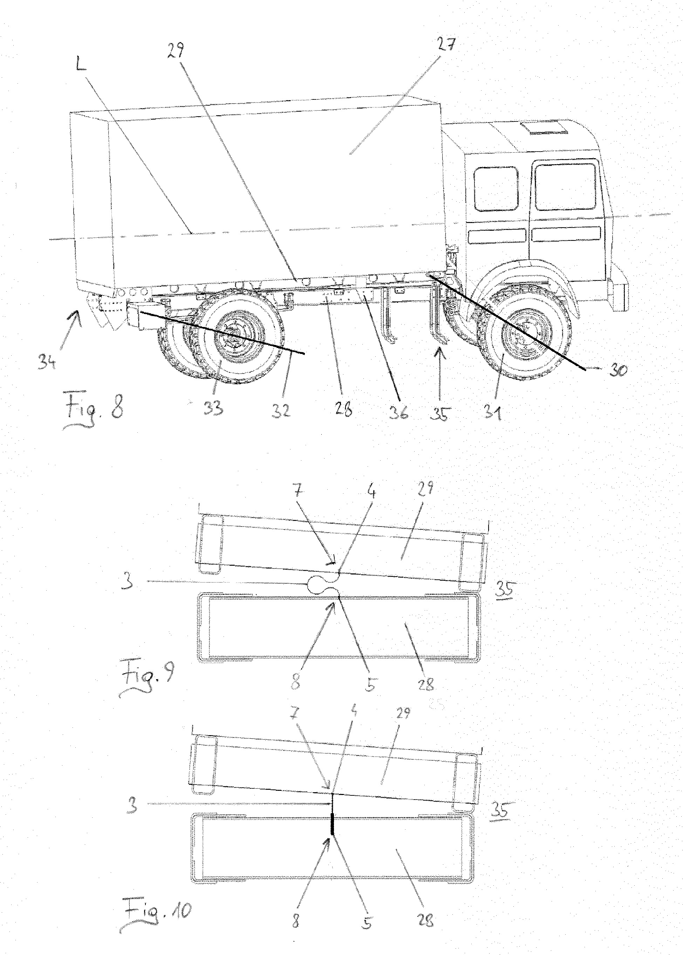

Die Trägerabschnitte 9, 10 können an beliebigen Einrichtungen angeordnet sein, deren Abstandsveränderungen erfasst werden sollen. In Verbindung mit einem Fahrzeug 27 gemäß den Fig. 8 bis 18 kann der Trägerabschnitt 9 beispielsweise an einem Fahrgestell 28 und der Trägerabschnitt 10 an einer Auflagekonstruktion 29 angeordnet sein.

Die Referenzstellen 7, 8 weisen eine zueinander veränderbare Distanz D auf und bewegen sich bei einer Distanzänderung ΔD aufeinander zu oder voneinander weg.

Der Bügel 3 weist einen zwischen den Aufhängungen 4, 5 verlaufenden, gebogenen und elastischen Federabschnitt 12 auf. In der dargestellten Ausführungsform ist dieser Federabschnitt 12 derart geformt, dass der Bügel 3 im unbelasteten bzw. unverformten Zustand eine Ω-förmige Gestalt hat. Der Federabschnitt 12 ist demnach derart geformt, dass er sich bei der Distanzänderung ΔD verbiegt.

Bei einer negativen Distanzänderung ΔD, d.h. bei einer Verringerung der Distanz D zwischen den Referenzstellen 7, 8, wird die Krümmung des Federabschnittes 12 verstärkt, sodass die konvexe Seitenfläche 13 des Federabschnittes gedehnt wird. Hingegen wird bei einer positiven Distanzänderung ΔD, d.h. bei einer Vergrößerung der Distanz D zwischen den Referenzstellen 7, 8, die Krümmung des Federabschnittes 12 verringert, sodass die konvexe Seitenfläche 13 des Federabschnittes 12 gestaucht, d.h. verkürzt, wird.

Aufgrund der Elastizität des Federabschnittes 12 strebt der Bügel 3 danach, in seinen Ausgangszustand zurückzukehren.

An der konvexen Seitenfläche 13 sind in der in Fig. 1 gezeigten Ausführungsform zwei Dehnmessstreifen 14 (DMS) angeordnet, insbesondere angeklebt, die über Leiter 15 mit einer Messspannung versorgt werden. Dafür weist die Messvorrichtung 1 vorzugsweise eine mit der Wegmesseinrichtung 2 über die Leiter 15 verbundene Steuerung 16 auf.

Beim Biegen des Bügels, d.h. beim Stauchen und Dehnen der konvexen Seitenfläche 13, verändert sich der Widerstand der daran angeordneten DMS 14. Aus dieser Widerstandsänderung kann die Steuerung 16 die Größe der Distanzänderung ΔD ermitteln.

In der in Fig. 1 dargestellten Ausführungsform weist die erfindungsgemäße Messvorrichtung drei Wegmesseinrichtungen 2 mit jeweils zwei über Leiter 15 mit der Steuerung 16 verbundenen DMS 14 auf. Die erfindungsgemäße Messvorrichtung 1 kann aber auch nur eine einzelne Wegmesseinrichtung 2, nur zwei Wegmesseinrichtungen 2 oder auch mehr als drei Wegmesseinrichtungen 2 aufweisen. Ebenso kann jede der Wegmesseinrichtungen 2 nur einen DMS 14 oder mehr als zwei DMS 14, beispielsweise vier DMS 14, aufweisen.

Vorzugsweise ist die Steuerung 16 - wie in Fig. 1 dargestellt - mit wenigstens einer Ausgabeeinrichtung 17 verbunden, über die ein optisches, akustisches und/oder haptisches Signal aus- bzw. abgegeben werden kann.

Bevorzugt steht die Steuerung 16 mit einem Datenspeicher 18 in Verbindung bzw. ist ein derartiger Datenspeicher 18 ein integrierter Bestandteil der Steuerung 16.

Bevorzugt ist die Steuerung 16 weiters mit einer Sendeeinrichtung 19 verbunden, die kabellos, z.B. über Funk, mit einem Empfänger 20 in Verbindung steht.

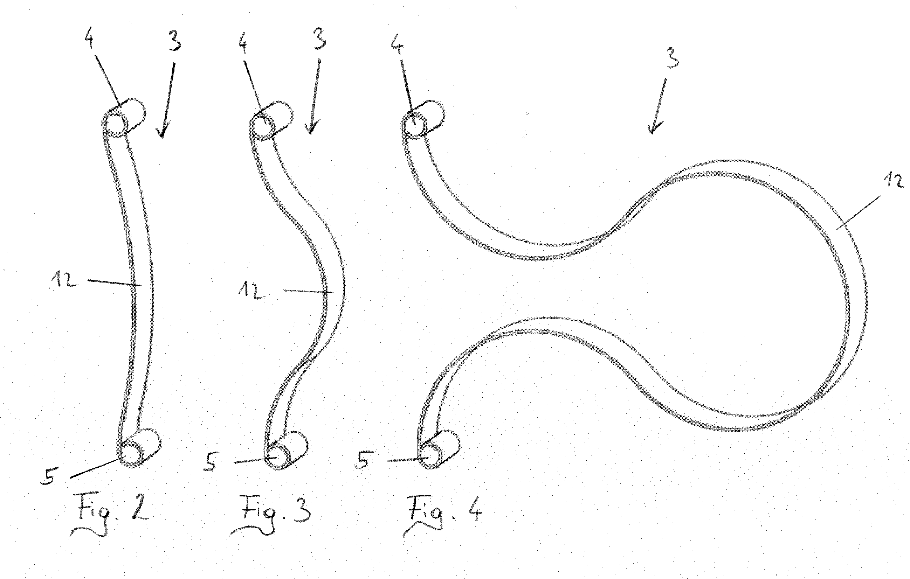

Die Fig. 2 bis 4 zeigen unterschiedliche geometrische Ausführungsformen des Bügels 3 der Wegmesseinrichtung 2 der erfindungsgemäßen Messvorrichtung 1. In allen drei Ausführungsformen weist der Bügel 3 die Form einer Blattfeder mit gerollten Augen als Aufhängungen 4, 5 auf.

In Fig. 2 hat der Federabschnitt 12 des Bügels 3 im Wesentlichen nur einen einzigen Krümmungsabschnitt mit einem sehr großen Krümmungsradius. Die Distanzänderung ΔD, die mit einer Wegmesseinrichtung 2 mit einen derartigen Bügel 3 messbar ist, ist dementsprechend nur relativ gering. Dafür ist die Messgenauigkeit relativ hoch.

In den Fig. 3 und 4 hingegen weist der Federabschnitt 12 des Bügels 3 jeweils im Wesentlichen drei Krümmungsabschnitte auf, wobei die an die Anschlüsse 4, 5 angrenzenden, seitlichen Krümmungsabschnitte gegengleich zum dazwischen verlaufenden, mittleren Krümmungsabschnitt gekrümmt sind. Die Distanzänderung ΔD, die mit den damit ausgestatteten Wegmesseinrichtungen 2 messbar ist, ist dementsprechend größer und die Messgenauigkeit kleiner.

Der Bügel 3 gemäß Fig. 2 hat eine C-förmige Gestalt und die Bügel 3 gemäß Fig. 3 und 4 haben eine Ω-förmige Gestalt.

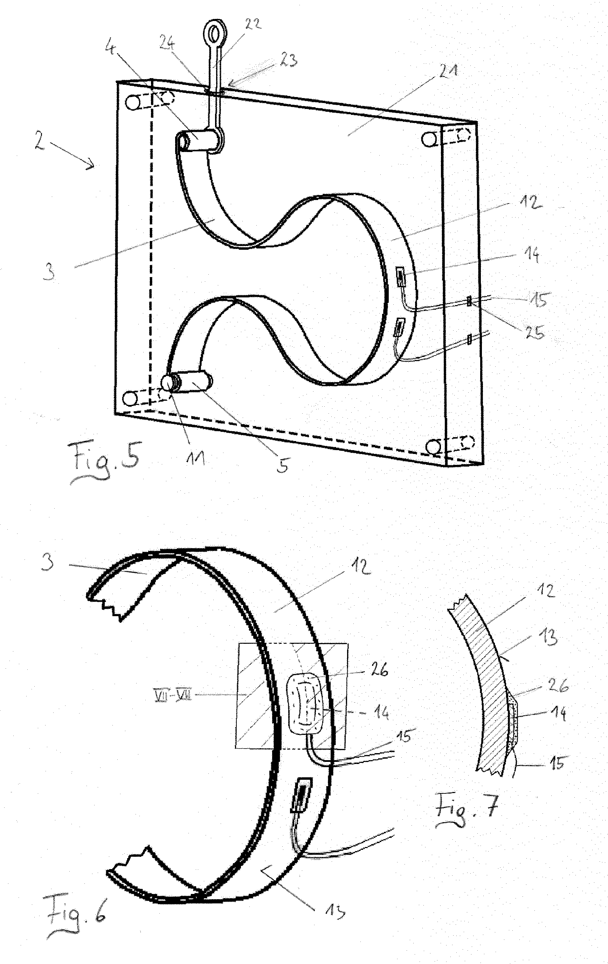

Die Fig. 5 zeigt eine Ausführungsform der Wegmesseinrichtung 2, bei der der Bügel 3 in einem schmutzdichten Gehäuse 21 angeordnet ist.

Der Bügel 3 ist an seiner ersten Aufhängung 4 mit einem Ende eines Verbindungselementes 22 verbunden, das zumindest abschnittsweise durch eine Öffnung 23 aus dem Gehäuse 21 hinausragt. Zwischen dem Verbindungselement 22 und der Öffnung 23 ist eine Dichtung 24 angeordnet.

Das Verbindungselement 22 ist mit seinem anderen Ende mit der ersten Referenzstelle 7 verbindbar. Somit ist die erste Aufhängung 4 (indirekt über das Verbindungselement 22) mit der ersten Referenzstelle 7 verbindbar.

Die Leiter 15 der DMS 14 sind durch weitere, vorzugsweise abgedichtete, Öffnungen 25 aus dem Gehäuse 21 geführt.

Die zweite Aufhängung 5 des Bügels 3 ist z.B. über einen Stift 11 schwenkbar mit dem Gehäuse 21 verbunden. Da das Gehäuse 21 mit der zweiten Referenzstelle 8 verbindbar, beispielsweise an dieser anschraubbar, ist, ist auch die zweite Aufhängung 5 (indirekt über das Gehäuse 21) mit der zweiten Referenzstelle 8 verbindbar.

Fig. 6 zeigt den freigeschnittenen Abschnitt des Federabschnittes 12 des Bügels 3 gemäß einer weiteren Ausführungsform mit zwei an der konvexen Seitenfläche 13 des Federabschnittes 12 applizierten DMS 14.

Einer der DMS 14 ist zwischen einer Schutzschicht 26 und dem Federabschnitt 12 bzw. dessen konvexer Seitenfläche 13 aufgenommen, sodass der DMS 14 vor Umwelteinflüssen, z.B. Feuchtigkeit oder Schmutz, geschützt ist. Die Leiter 15 des DMS 14 führen aus der Schutzschicht 26 hinaus. Die Schutzschicht 26 kann alternativ oder zusätzlich zum Gehäuse 21 vorgesehen sein.

Fig. 7 zeigt eine Schnittansicht durch den mittels der Schutzschicht 26 abgedichteten DMS 14 entlang der in Fig. 6 eingezeichneten Schnittebene VII-VII.

Obwohl in Fig. 6 nur einer der DMS 14 mit der Schutzschicht 26 abgedichtet ist, sind im Rahmen der Erfindung vorzugsweise beide DMS 14 (bzw. bei mehr als zwei DMS 14 alle DMS 14) zwischen der Schutzschicht 26 bzw. jeweils einer eigenen Schutzschicht 26 und dem Federabschnitt 12 angeordnet.

Die Schutzschicht 26 besteht beispielsweise aus einem Kunststoff, wie Butylgummi, der im nicht ausgehärteten Zustand auf dem DMS 14 aufgebracht wird.

Die Fig. 8 bis 18 zeigen Ausführungsformen eines erfindungsgemäßen Fahrzeuges 27 mit unterschiedlichen Arten der Anordnung einer erfindungsgemäßen Messvorrichtung 1 oder Details derartiger Ausführungsformen.

Das erfindungsgemäße Fahrzeug 27 mit einer Längsachse L weist jeweils ein um die Längsachse L verdrehbares Fahrgestell 28 und eine im Wesentlichen drehsteife Auflagekonstruktion 29 auf.

Fig. 8 zeigt eine erste Ausführungsform des Fahrzeugs 27 in einer isometrischen Ansicht. Um die Verdrehung des Fahrgestells 28 zu veranschaulichen, ist sowohl die Rotationsachse 30 der Vorderräder 31 als auch die Rotationsachse 32 der Hinterräder 33 eingezeichnet.

In der in Fig. 8 dargestellten Ausführungsform ist die Auflagekonstruktion 29 mit einem hinteren Ende 34 fest mit dem Fahrgestell 28 verbunden, sodass sich die Auflagekonstruktion 29 an dieser Stelle nicht gegenüber dem Fahrgestell 28 um die Längsachse L verdrehen kann. Mit einem vorderen Ende 35 liegt die Auflagekonstruktion 29 am Fahrgestell 28 auf, wobei sie durch Sicherungselemente 36 gegen ein seitliches Verrutschen geschützt ist.

Bei einer Verdrehung des Fahrgestells 28 hebt die Auflagekonstruktion 29 an einer Seite im Bereich des vorderen Endes 35 vom Fahrgestell 28 ab.

Die Fig. 9 und 10 zeigen in vereinfachter Darstellung jeweils einen Querschnitt des Fahrzeuges 27 gemäß Fig. 8 im Bereich des vorderen Endes 35 der Auflagekonstruktion 29.

Der Bügel 3 der Wegmesseinrichtung 2 ist über seine erste Aufhängung 4 mit der ersten Referenzstelle 7 an der Auflagekonstruktion 29 verbunden. Über die zweite Aufhängung 5 ist der Bügel 3 mit der zweiten Referenzstelle 5 am Fahrgestell 28 verbunden.

In der Ausführungsform gemäß Fig. 9 ist der Bügel 3 derart angeordnet, dass er im Wesentlichen quer zur Längsachse L des Fahrzeuges 27 gebogen ist. In der Ausführungsform gemäß Fig. 10 hingegen ist der Bügel 3 im Wesentlichen in Richtung der Längsachse L gebogen. Denkbar ist auch eine Anordnung der Messvorrichtung 1, bei der der Bügel 3 derart angeordnet ist, dass er schräg zur Längsachse L gebogen ist.

Es ist allerdings allen Ausführungsformen gemeinsam, dass sich der Abstand zwischen den beiden Aufhängungen 4, 5 vergrößert, wenn sich das Fahrgestell 28 um die Längsachse L verwindet, weil sich die Auflagekonstruktion 29 an einer Seite (im dargestellten Beispiel auf der linken Seite) vom Fahrgestell 28 abhebt, während sie auf der anderen Seite am Fahrgestell 28 liegen bleibt. Die sich daraus ergebende Abstandsänderung zwischen den Aufhängungen 4, 5 wird von der Wegmesseinrichtung 2 erfasst und kann wie beschrieben weiterverarbeitet bzw. ausgewertet und angezeigt werden.

Obwohl in den Fig. 9 und 10 immer nur eine einzelne - quer zur Längsachse L gesehen mittig angeordnete - Wegmesseinrichtung 2 bzw. ein einziger Bügel 3 dargestellt ist, kann die im Fahrzeug 27 verbaute erfindungsgemäße Messvorrichtung 1 auch mehr als eine Wegmesseinrichtung 2 aufweisen. Beispielsweise kann im Bereich des vorderen Endes 35 an jeder Seite jeweils eine Wegmesseinrichtung 2 angeordnet sein. Damit kann beispielsweise auf einfache Weise erfasst werden, in welche Richtung sich das Fahrgestell 28 verwindet.

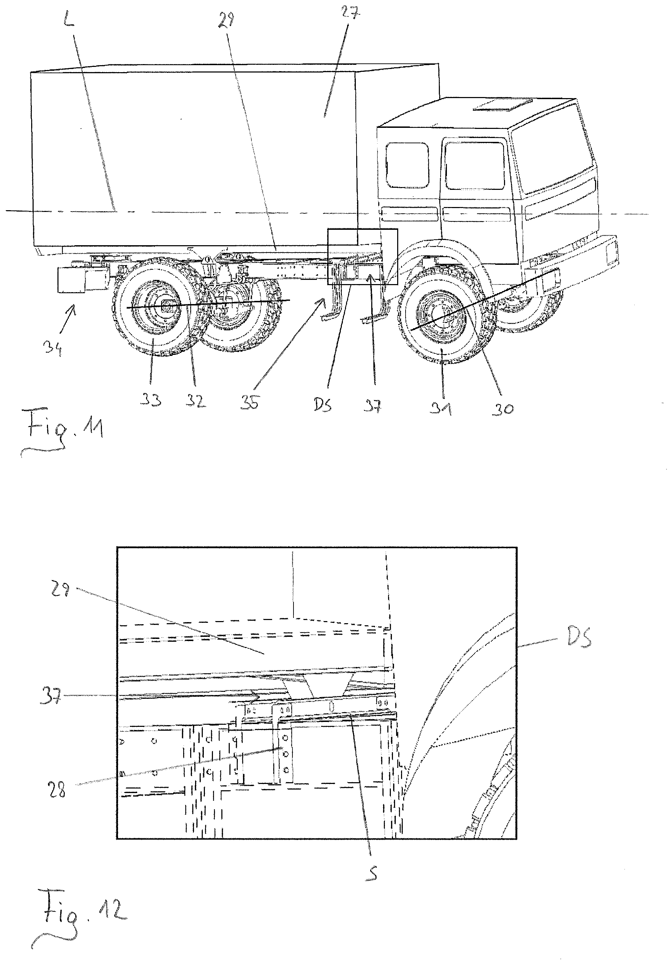

In Fig. 11 ist in isometrischer Ansicht eine weitere Ausführungsform des erfindungsgemäßen Fahrzeugs 27 dargestellt, wobei wie in Fig. 8 die Rotationsachsen 30, 32 der Vorderräder 31 und Hinterräder 33 eingezeichnet sind.

Beim Fahrzeug 27 gemäß Fig. 11 ist die Auflagekonstruktion 29 mit dem Fahrgestell 28 in einem Mittelbereich zwischen dem vorderen Ende 35 und dem hinteren Ende 34 mit Bezug auf die Längsachse L drehsteif verbunden. Im Bereich des vorderen Endes 35 ist die Auflagekonstruktion 29 über eine - quer zur Längsachse L gesehen mittig angeordnete - Schwenklagerung 37 mit dem Fahrgestell 28 verbunden. Die Schwenklagerung 37 ermöglicht ein Verschwenken bzw. Verkippen der Auflagekonstruktion 29 gegenüber dem Fahrgestell 28 um eine parallel zur Längsachse L verlaufende Schwenkachse S.

Fig. 12 zeigt eine Detailansicht eines Ausschnittes DS der Schwenklagerung 37 im Bereich des vorderen Endes 35 der Auflagekonstruktion 29.

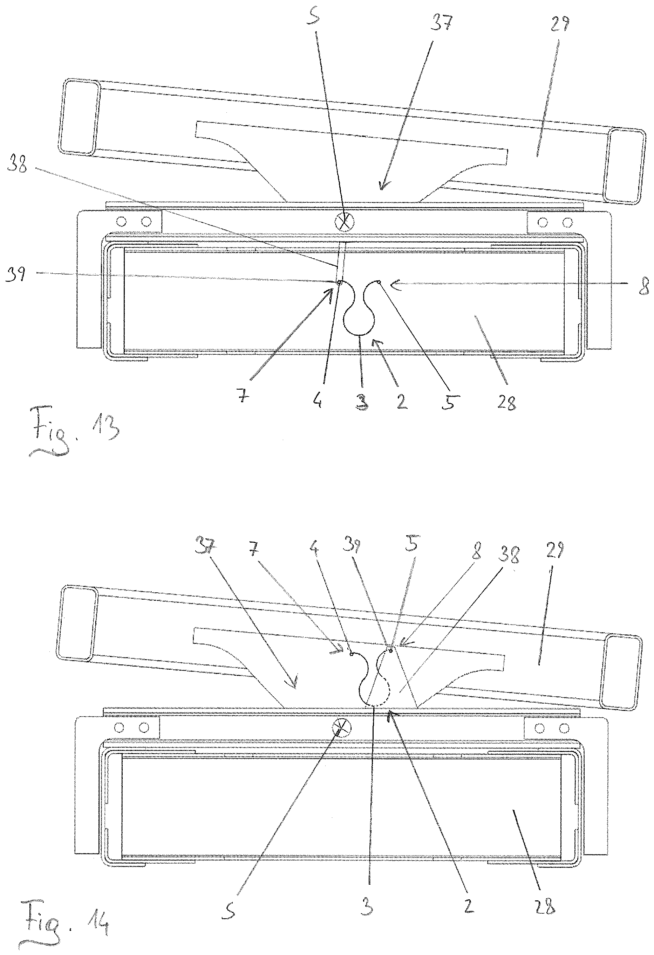

Fig. 13 zeigt einen Querschnitt des Fahrzeuges 27 aus Fig. 11 im Bereich des vorderen Endes 35 der Auflagekonstruktion 29 in einer vereinfachten Darstellung.

In der dargestellten Ausführungsform weist der zur Auflagekonstruktion 29 gehörende Teil der Schwenklagerung 37 einen Vorsprung 38 in Form eines Stabes auf, der in die Konstruktion des Fahrgestells 28 hineinragt. Bei nicht verdrehtem Fahrgestell 28, d.h. wenn das Fahrgestell 28 im Wesentlichen parallel zur Auflagekonstruktion 29 verläuft, ragt der Vorsprung 38 in Form eines Stabes der Auflagekonstruktion 29 im Wesentlichen lotrecht nach unten.

Der Bügel 3 der in Fig. 13 dargestellten Wegmesseinrichtung 2 ist mit seiner ersten Aufhängung 4 mit der ersten Referenzstelle 7 am freien Ende 39 des Vorsprungs 38 in Form eines Stabes und mit seiner zweiten Aufhängung 5 mit der zweiten Referenzstelle 8 am Fahrgestell 28 verbunden. Dabei verläuft der gebogene Federabschnitt 12 des Bügels 3 im Wesentlichen quer zur Längsachse L des Fahrzeuges 27.

Beim Verdrehen des Fahrgestells 28 verschwenkt die Auflagekonstruktion 29 an der Schwenklagerung 37 um die Schwenkachse S, sodass das freie Ende 39 des als Stab ausgeführten Vorsprunges 38 zu einer Seite des Fahrgestells 28 hin geschwenkt wird (im Beispiel gemäß Fig. 13 nach links). Somit bewegt sich die erste Referenzstelle 7 am freien Ende 39 von der zweiten Referenzstelle 8 am Fahrgestell 28 weg. Verwindet sich das Fahrgestell 28 in die andere Richtung, bewegt sich die erste Referenzstelle 7 am freien Ende 39 des als Stab ausgeführten Vorsprunges 38 zu der zweiten Referenzstelle 8 am Fahrgestell 28 hin.

Fig. 14 zeigt in vereinfachter Darstellung (wie Fig. 13) einen Querschnitt des erfindungsgemäßen Fahrzeuges 27 im Bereich des vorderen Endes 35 der Auflagekonstruktion 29.

Bei der in Fig. 14 dargestellten, alternativen Ausführungsform ist der Vorsprung 38 nicht mit der Auflagekonstruktion 29, sondern mit dem Fahrgestell 28 verbunden. Der Vorsprung 38 ragt nach oben hin vom Fahrgestell 28 weg.

In der in Fig. 14 dargestellten, alternativen Ausführungsform ist der Bügel 3 der erfindungsgemäßen Wegmesseinrichtung 2 mit seiner ersten Aufhängung 4 mit der ersten Referenzstelle 7, die sich an dem zur Auflagekonstruktion 29 gehörenden Teil der Schwenklagerung 37 befindet, verbunden. Mit seiner zweiten Aufhängung 5 ist der Bügel 3 mit der zweiten Referenzstelle 8 am freien Ende 39 des Vorsprunges 38, der vom Fahrgestell 28 wegragt, verbunden. Auch bei dieser Ausführungsform verläuft der gebogene Federabschnitt 12 des Bügels 3 im Wesentlichen quer zur Längsachse L des Fahrzeuges 27.

In der Ausführungsform gemäß Fig. 14 verschwenkt die Auflagekonstruktion 29 beim Verdrehen des Fahrgestells 28 an der Schwenklagerung 37 um die Schwenkachse S, sodass die erste Referenzstelle 7 an dem zur Auflagekonstruktion 29 gehörenden Teil der Schwenklagerung 37 zu einer Seite des Fahrgestells 28 hin geschwenkt wird (im Beispiel gemäß Fig. 14 nach rechts). Somit bewegt sich die erste Referenzstelle 7 zu der zweiten Referenzstelle 8, die an dem mit dem Fahrgestell 28 verbundenen Vorsprung 38 angeordnet ist, hin. Verwindet sich das Fahrgestell 28 in die andere Richtung, bewegt sich die erste Referenzstelle 7 von der zweiten Referenzstelle 8, die an dem mit dem Fahrgestell 28 verbundenen Vorsprung 38 angeordnet ist, weg.

Bei einem Fahrzeug 27, das die Messvorrichtung 1 mit einem Datenspeicher 18 aufweist, sind im Datenspeicher 18 Fahrzeugdaten zu den jeweiligen Referenzstellen 7, 8 hinterlegt. Anhand dieser Fahrzeugdaten können die an den jeweiligen Referenzstellen 7, 8 gemessenen Distanzänderungen ΔD ausgewertet werden. Somit kann die Wegmesseinrichtung 2 bzw. können die Wegmesseinrichtungen 2 an unterschiedlichen, vorbestimmten Stellen zwischen dem Fahrgestell 28 und der Auflagekonstruktion 29 montiert und deren Messdaten verarbeitet werden.

Die im Datenspeicher 18 gespeicherten Fahrzeugdaten sind im einfachsten Fall ein oder mehrere Schwellenwerte für zulässige Distanzänderungen ΔD für die jeweilige Referenzstelle 7, 8, womit bei Überschreitung des oder der Schwellenwerte/s eine Ausgabe in Form eines optischen und/oder akustischen und/oder haptischen Signals erfolgen kann. Da allerdings eine häufigere Überschreitung eines niedrigeren Schwellenwertes insgesamt eine ähnlich schädigende Wirkung auf das Fahrgestell 28 haben kann, wie eine einmalige oder seltenere Überschreitung eines höheren Schwellenwertes, können im Datenspeicher 18 auch Schwellenwerte für kumulierte Distanzänderungen ΔD hinterlegt sein.

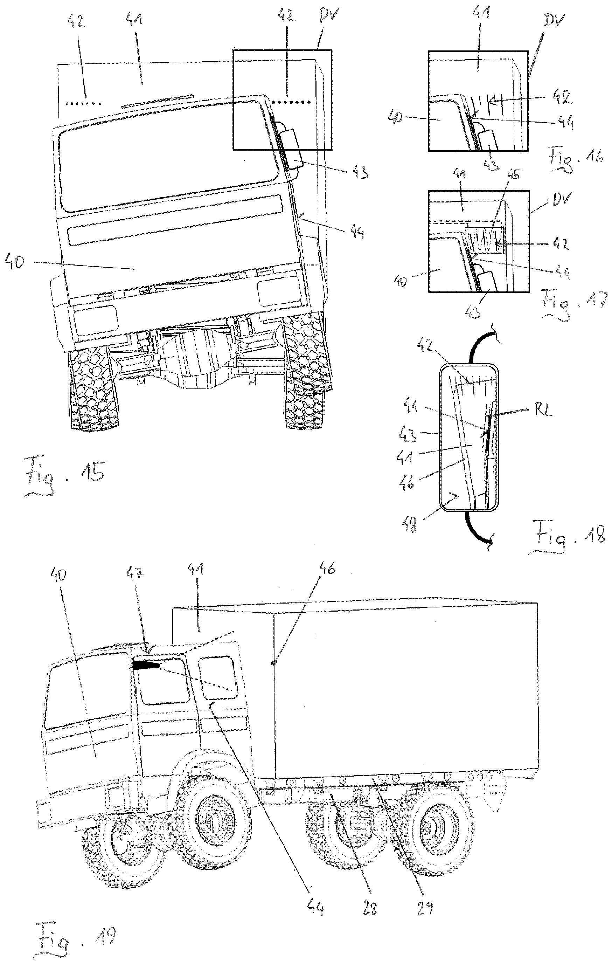

In den Fig. 15 bis 19 sind weitere Systeme beschrieben, mit denen die Verdrehung des Fahrgestells 28 ermittelt werden kann. Diese Systeme sind zusätzlich oder alternativ zur Messung der Verdrehung mit Hilfe der Wegmesseinrichtung 2 einsetzbar.

Denkbar sind daher auch Ausführungsformen von Fahrzeugen 27, bei denen nur die in Folge beschriebenen Systeme zum Messen der Verdrehung des Fahrgestells 28 verwendet werden, ohne dass das Fahrzeug 27 eine erfindungsgemäße Messvorrichtung 1 mit wenigstens einer Wegmesseinrichtung 2 aufweist. Dabei kann nur ein einzelnes der Systeme oder aber eine Kombination mehrerer Systeme zum Einsatz kommen.

Fig. 15 zeigt das erfindungsgemäße Fahrzeug 27 mit verdrehtem Fahrgestell 28 in einer Vorderansicht. Eine Fahrerkabine 40 ist üblicherweise, d.h. abgesehen von den bei Fahrerkabinen 40 vorgesehenen Dämpfungseinrichtungen, in einem vorderen Bereich starr mit dem verdrehbaren Fahrgestell 28 verbunden und in einem hinteren Bereich beweglich am Fahrgestell 28 gelagert. Die Auflagekonstruktion 29 weist in der dargestellten Ausführungsform einen Aufbau mit einer im Bereich des vorderen Endes 35 angeordneten Vorderwand 41 auf.

An der Vorderwand 41 ist beidseitig eine punktförmige, im Wesentlichen horizontal verlaufende, Skala 42 angebracht. Die Skala 42 kann beispielsweise auf die Vorderwand 41 aufgeklebt, aufgemalt, angeschweißt, angeschraubt oder angenietet sein.

Beim Verdrehen des Fahrgestells 28 verschwenken die Fahrerkabine 40 und die Auflagekonstruktion 29 mit dem Aufbau seitlich relativ zueinander, sodass das Ausmaß der Verdrehung des Fahrgestells 28 anhand der Position der Flucht der Seitenwand 44 der Fahrerkabine 40 auf der Skala 42 im Seitenspiegel 43 abgelesen werden kann.

Vorzugsweise ist die Skala 42 beidseitig an der Vorderwand 41 angebracht, sie kann aber auch nur an der Fahrerseite oder der Beifahrerseite angebracht sein.

Die Fig. 16 und 17 zeigen jeweils einen Detailausschnitt DV aus Fig. 15 mit einem Teil der Fahrerkabine 40 und der Vorderwand 41 gemäß weiterer möglicher Ausführungsformen.

Bei der in Fig. 16 dargestellten Ausführungsform weist die Skala 42 keine punktförmigen, sondern strichförmige Markierungen auf.

Bei der in Fig. 17 dargestellten Ausführungsform ist die Skala 42 auf einer beheizbaren Tafel 45 angebracht.

Fig. 18 zeigt ein weiteres einfaches System zum Ermitteln des Verdrehungsgrades des Fahrgestells 28. Dafür weist zumindest einer der Seitenspiegel 43 eine auf der Seitenspiegelfläche 48 aufgebrachte, beispielsweise aufgemalte oder aufgeklebte, Skala 42 auf. Beim Verdrehen des Fahrgestells 28 verschwenkt auch die Fahrerkabine 40 relativ zur Auflagekonstruktion 29 mit dem Aufbau, sodass anhand der Position einer im Seitenspeigel 43 gespiegelten, vorderen Seitenkante 46 der Vorderwand 41 auf der Skala 42 der Verwindungsgrad des Fahrgestells 28 bestimmt werden kann.

Damit die Sitzposition der Person im Inneren der Fahrerkabine 40, die anhand der Skala 42 auf der Seitenspiegelfläche 48 den Verwindungsgrad des Fahrgestells 28 bestimmt, keinen Einfluss auf den von der Person auf der Skala 42 abgelesenen Wert hat, weist der Seitenspiegel 43 (bzw. weisen die Seitenspiegel 43) auf der Seitenspiegelfläche 48 zusätzlich zur Skala 42 auch eine Referenzlinie RL auf. Diese Referenzline RL muss beim Ablesen des Wertes von der Skala 42, d.h. beim Überprüfen, welche punktförmige bzw. strichförmige Markierung der Skala 42 mit der Spiegelung der vorderen Seitenkante 46 der Vorderwand 41 zusammenfällt, mit der Spiegelung der Seitenwand 44 der Fahrerkabine 40 zusammenfallen.

Der in Fig. 18 dargestellte Seitenspiegel 43 kann unabhängig von oder zusammen mit allen vorhergehend beschriebenen Ausführungsformen des Fahrzeuges 27 (mit oder ohne die Messvorrichtung 1) verwendet werden.

In Fig. 19 ist ein weiteres System zum Ermitteln des Verdrehungsgrades des Fahrgestells 28 dargestellt, wobei dieses System einen optischen Sensor 47, beispielsweise in Form einer Kamera, aufweist. Der optische Sensor 47 erfasst bei einer Verdrehung des Fahrgestells 28 und dem gleichzeitigen Verschwenken der Fahrerkabine 40 die seitliche Verschiebung eines Referenzpunktes bzw. einer Referenzkante der Vorderwand 41 gegenüber der Fahrerkabine 40. Als Referenzkante kann beispielsweise die Seitenkante 46 dienen.

Auch das in Fig. 19 dargestellte System mit dem optischen Sensor 47 kann unabhängig von oder zusammen mit allen vorhergehend beschrieben Ausführungsformen des Fahrzeuges 27 (mit oder ohne die Messvorrichtung 1) verwendet werden.

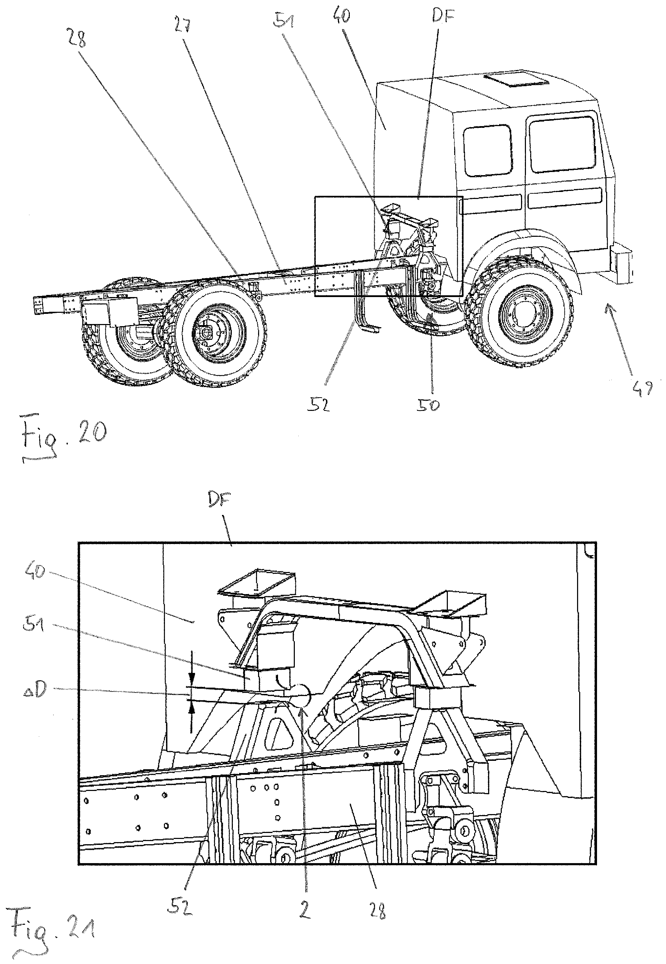

Beim erfindungsgemäßen Fahrzeug 27 gemäß Fig. 20 ist die Fahrerkabine 40 in einem vorderen Bereich 49 mit dem Fahrgestell 28 mit Bezug auf die Längsachse L drehsteif verbunden und in einem hinteren Bereich 50 über dämpfende Auflageelemente 51, die auf korrespondierenden Auflagesitzen 52 des Fahrgestells 28 aufliegen, frei gelagert.

In Fig. 21, die eine Detailansicht eines Ausschnittes DF der freien Lagerung gemäß Fig. 20 darstellt, ist zu sehen, dass beim Verdrehen des Fahrgestells 28 um seine Längsachse L wenigstens eines der Auflageelemente 51 vom korrespondierenden Auflagesitz 52 abhebt, sodass eine Distanzänderung ΔD zwischen dem Auflageelement 51 und dem Auflagesitz 52 stattfindet.

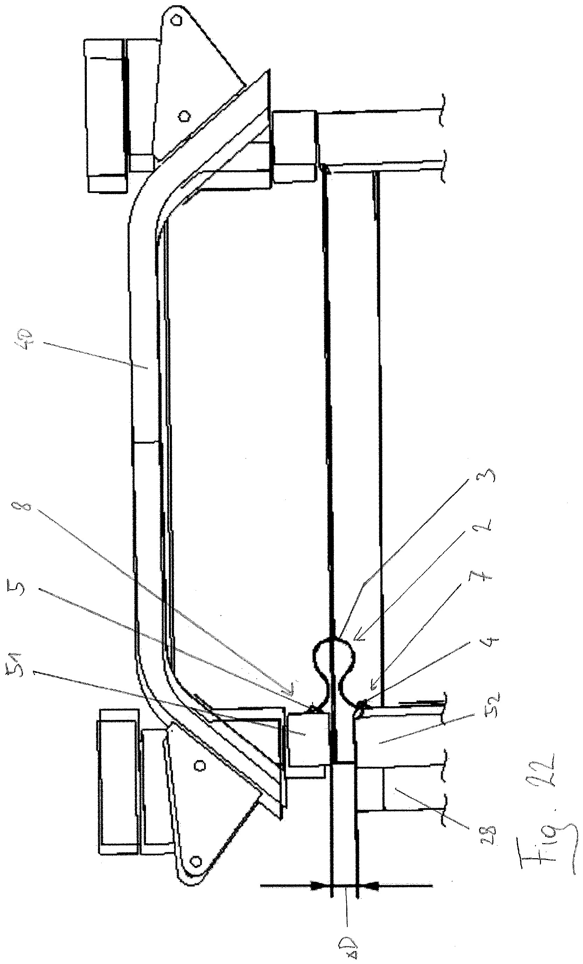

Fig. 22 zeigt einen Querschnitt des Fahrzeuges 27 im Bereich der freien Lagerung im hinteren Bereich 50 der Fahrerkabine 40, wobei die in den Fig. 20 und 21 aus Gründen der Übersicht weggelassene Wegmesseinrichtung 2 in Fig. 22 in einer vereinfachten Form dargestellt ist.

In Fig. 22 befindet sich die erste Referenzstelle 7, mit welcher die erste Aufhängung 4 der Wegmesseinrichtung 2 verbunden ist, am Auflagesitz 52, der ein Bestandteil des Fahrgestells 28 ist. Die zweite Referenzstelle 8, mit welcher die zweite Aufhängung 5 der Wegmesseinrichtung 2 verbunden ist, befindet sich am Auflageelement 51, das ein Bestandteil der Fahrerkabine 40 ist.

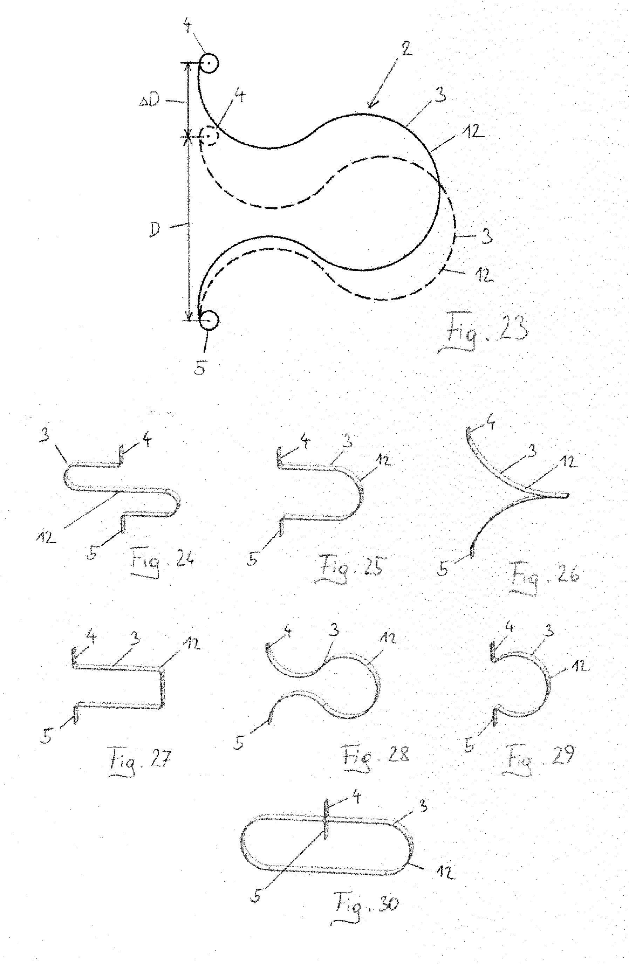

Fig. 23 zeigt eine Ausführungsform des Bügels 3 der Wegmesseinrichtung 2 der erfindungsgemäßen Messvorrichtung 1 einmal in einem unbelasteten Zustand (strichlierte Linie) und einmal in einem belasteten Zustand (durchgezogene Linie).

In Fig. 23 wird die Distanz D zwischen den Aufhängungen 4, 5 des Bügels 3 vergrößert, sodass eine positive Distanzänderung ΔD stattfindet, und die Krümmungsradien der gebogenen Bereiche des Federabschnittes 12 des Bügels 3 vergrößert werden.

Die Fig. 24 bis 30 zeigen unterschiedliche Formen, die der Bügel 3 der Wegmesseinrichtung 2 der erfindungsgemäßen Messvorrichtung 1 im Rahmen der Erfindung annehmen kann. Dies stellt lediglich eine Auswahl möglicher Formen dar, wobei der Bügel 3 im Rahmen der Erfindung auch andere, nicht dargestellte Formen annehmen kann.

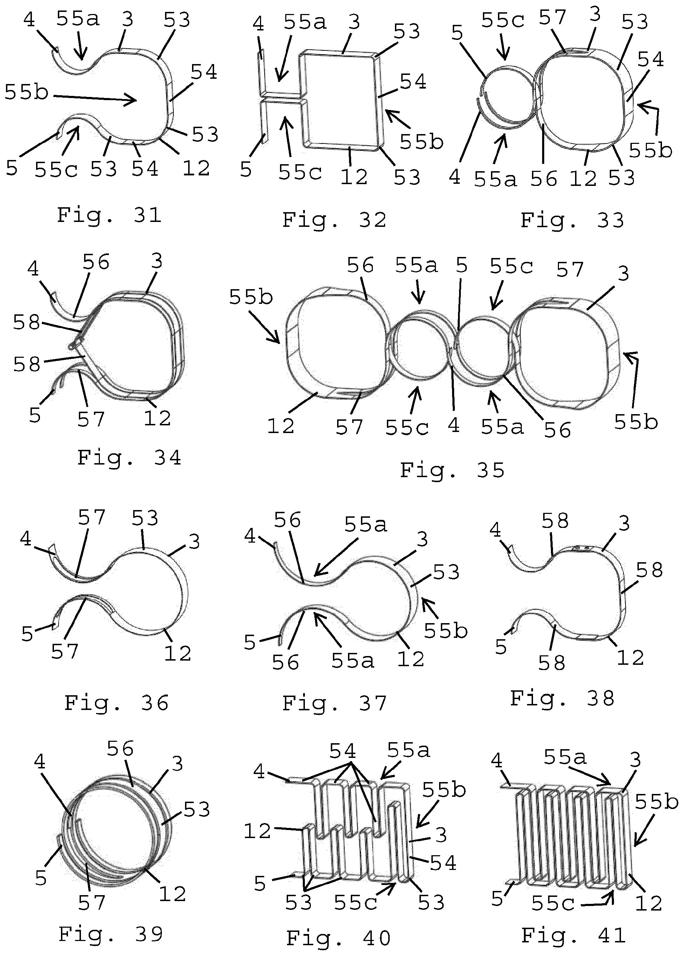

Fig. 31 bis 41 zeigen weitere voneinander unterschiedliche Formen, die der Bügel 3 der Wegmesseinrichtung 2 der erfindungsgemäßen Messvorrichtung 1 im Rahmen der Erfindung annehmen kann.

In allen dargestellten Ausführungsformen befindet sich zwischen der ersten Aufhängung 4 und der zweiten Aufhängung 5 des Bügels 3 der gebogene Federabschnitt 12. Der Federabschnitt 12 kann dabei im unbelasteten Zustand in einem oder mehreren Bereich/en gebogen sein und bei mehreren Biegebereichen unterschiedlich große Krümmungsradien aufweisen.

In Fig. 24 ist der Bügel 3 im Wesentlichen S-förmig, in Fig. 25 im Wesentlichen U-förmig, in Fig. 26 im Wesentlichen V-förmig, in Fig. 27 im Wesentlichen ]-förmig, in Fig. 28 im Wesentlichen Ω-förmig, in Fig. 29 im Wesentlichen C-förmig bzw. ebenfalls Ωförmig und in Fig. 30 im Wesentlichen O-förmig, wobei beim Bügel 3 in der O-förmigen Ausführungsform zwischen den beiden Aufhängungen 4, 5 ein Spalt gebildet ist.

In den Fig. 31, 36, 37 und 38 ist der Bügel 3 im Wesentlichen Ωförmig. Auch der Bügel 3 in Fig. 32 kann im weitesten Sinne als Ω-förmig oder auch als O-förmig angesehen werden.

Der Bügel 3 aus Fig. 39 kann als O-förmig angesehen werden. Auch die in den Fig. 33, 34 und 35 dargestellten Bügel 3 können als O-förmig bzw. mehrfach O-förmig angesehen werden.

Die Bügel 3 der Fig. 31, 32, 33, 34, 35, 38, 40 und 41 weisen beispielsweise zwischen Krümmungsabschnitten 53 gerade Abschnitte 54 auf, wobei auch geknickte bzw. abgewinkelte Bereiche im Rahmen der Erfindung als Krümmungsabschnitte 53 angesehen werden.

In den Fig. 31, 32, 33, 34, 36, 37 und 38 sind Bügel 3 dargestellt, die jeweils drei direkt aufeinanderfolgende Teilabschnitte 55a, 55b, 55c aufweisen, in denen jeweils ein Krümmungsabschnitt 53 oder auch mehrere Krümmungsabschnitte 53 angeordnet sind. Die Krümmungsabschnitte 53 des ersten Teilabschnittes 55a und des dritten Teilabschnittes 55c sind bei den Bügeln 3 dieser Figuren alle in die selbe Richtung gebogen und der bzw. die Krümmungsabschnitt/e 53 des zweiten Teilabschnittes 55b ist/sind in die entgegengesetzte Richtung gebogen.

Der Bügel 3 in den Fig. 36 und 37 weist beispielsweise in jedem Teilabschnitt 55a, 55b, 55c nur einen Krümmungsabschnitt 53 auf, wohingegen der Bügel 3 in Fig. 32 pro Teilabschnitt 55 mehr als einen Krümmungsabschnitt 53 aufweist (jeweils zwei Krümmungsabschnitte 53 im ersten Teilabschnitt 55a und im dritten Teilabschnitt 55c und vier Krümmungsabschnitte 53 im zweiten Teilabschnitt 55b).

Die Bügel 3 der Fig. 35, 40 und 41 weisen mehr als drei Teilabschnitte 55 auf, wobei jeweils alle Krümmungsabschnitte 53 jener Teilabschnitte 55 mit mehreren Krümmungsabschnitten 53 in die selbe Richtung gebogen sind, und der bzw. die Krümmungsabschnitt/e 53 direkt aufeinanderfolgender Teilabschnitte 55 immer gegensätzlich gebogen ist/sind.

Fig. 37 zeigt einen Bügel 3 mit zwei schmalen Abschnitten 56, in denen jeweils eine Breite des Bügels 3 verringert ist. Fig. 36 hingegen zeigt zwei geschlitzte Abschnitte 57, in denen jeweils eine schlitzförmige Längsöffnung ausgebildet ist.

Fig. 33, 34, 35 und 39 stellen jeweils Bügel 3 mit wenigstens einem schmalen Abschnitt 56 und wenigstens einem geschlitzten Abschnitt 57 mit einer schlitzförmigen Längsöffnung dar, wobei der bzw. die schmale/n Abschnitt/e 56 durch die Längsöffnung/en durchgeführt ist/sind (z.B. bei den Fig. 33 und 35) oder aber der schmale Abschnitt 56 in der Längsöffnung des geschlitzten Abschnittes angeordnet ist bzw. verläuft (z.B. bei den Fig. 34 und 39).

Die in den Fig. 34 und 38 dargestellten Bügel 3 bestehen jeweils aus mehreren Teilstücken 58, wobei der Bügel 3 in Fig. 34 beispielsweise aus zwei und der Bügel 3 in Fig. 38 aus drei Teilstücken 58 besteht. Wenigstens eines der Teilstücke 58 jedes Bügels 3 weist vorzugsweise andere Materialeigenschaften, z.B. einen anderen E-Modul, als das andere bzw. die anderen Teilstück/e 58 auf.

### Bezugszeichenliste:

- 1: Messvorrichtung
- 2: Wegmesseinrichtung
- 3: Bügel
- 4: erste Aufhängung
- 5: zweite Aufhängung
- 6: Federabschnitt
- 7: erste Referenzstelle
- 8: zweite Referenzstelle
- 9: erster Trägerabschnitt
- 10: zweiter Trägerabschnitt
- 11: Stift
- 12: Federabschnitt
- 13: konvexe Seitenfläche
- 14: Dehnmessstreifen (DMS)
- 15: Leiter
- 16: Steuerung
- 17: Ausgabeeinrichtung
- 18: Datenspeicher
- 19: Sendeeinrichtung
- 20: Empfänger
- 21: Gehäuse
- 22: Verbindungselement
- 23: Öffnung
- 24: Dichtung
- 25: weitere Öffnung
- 26: Schutzschicht
- 27: Fahrzeug
- 28: Fahrgestell
- 29: Auflagekonstruktion
- 30: Rotationsachse Vorderräder
- 31: Vorderrad
- 32: Rotationsachse Hinterräder
- 33: Hinterrad
- 34: hinteres Ende
- 35: vorderes Ende
- 36: Sicherungselement
- 37: Schwenklagerung
- 38: Vorsprung
- 39: freies Ende
- 40: Fahrerkabine
- 41: Vorderwand
- 42: Skala
- 43: Seitenspiegel
- 44: Seitenwand
- 45: Tafel
- 46: Seitenkante
- 47: optischer Sensor
- 48: Seitenspiegelfläche
- 49: vorderer Bereich
- 50: hinterer Bereich
- 51: Auflageelement
- 52: Auflagesitz
- 53: Krümmungsabschnitt
- 54: gerader Abschnitt
- 55: (a,b,c) Teilabschnitt
- 56: schmaler Abschnitt
- 57: geschlitzter Abschnitt
- 58: Teilstück

- D: Distanz
- ΔD: Distanzänderung
- L: Längsachse
- S: Schwenkachse
- DS: Detail Schwenklagerung
- DV: Detail Vorderwand
- DF: Detail Fahrerkabine
- RL: Referenzlinie

## Patentansprüche

1. Messvorrichtung (1) zum Messen einer Distanzänderung (ΔD) zwischen einer ersten Referenzstelle (7) und einer zweiten Referenzstelle (8) mit wenigstens einer Wegmesseinrichtung (2), **dadurch gekennzeichnet, dass** die Wegmesseinrichtung (2) einen Bügel (3) mit einer ersten Aufhängung (4), die mit der ersten Referenzstelle (7) verbindbar ist, mit einer zweiten Aufhängung (5), die mit der zweiten Referenzstelle (8) verbindbar ist, und mit einem zwischen den Aufhängungen (4, 5) verlaufenden, elastischen Federabschnitt (12) aufweist, dass der Federabschnitt (12) im unbelasteten Zustand gebogen ist, und dass am gebogenen Federabschnitt (12) wenigstens ein Dehnmessstreifen (14) angeordnet ist.

2. Messvorrichtung nach Anspruch 1, **dadurch gekennzeichnet, dass** der Bügel (3) im unbelasteten Zustand eine im Wesentlichen einfach oder mehrfach Ω-förmige, U-förmige, C-förmige, V-förmige, ]-förmige, O-förmige oder S-förmige Gestalt aufweist.

3. Messvorrichtung nach Anspruch 1 oder 2, **dadurch gekennzeichnet, dass** der Federabschnitt (6) des Bügels (3) einen oder mehrere, insbesondere zwei oder drei, Krümmungsabschnitt/e (53) aufweist.

4. Messvorrichtung nach einem der Ansprüche 1 bis 3, **dadurch gekennzeichnet, dass** der Federabschnitt (6) des Bügels (3) drei direkt aufeinanderfolgende Teilabschnitte (55, 55a, 55b, 55c) mit jeweils einem oder mehreren Krümmungsabschnitt/en (53) aufweist, und dass der bzw. ggf. alle im ersten und im dritten Teilabschnitt (55a, 55c) angeordnete/n Krümmungsabschnitt/e (53) in eine andere Richtung gebogen ist/sind, als der bzw. ggf. alle im zweiten Teilabschnitt (55b) angeordnete/n Krümmungsabschnitt/e (53).

5. Messvorrichtung nach einem der Ansprüche 1 bis 4, **dadurch gekennzeichnet, dass** die erste Aufhängung (4) mit einem Verbindungselement (22) verbunden ist, und dass das Verbindungselement (22) mit der ersten Referenzstelle (7) verbindbar ist, sodass die erste Aufhängung (4) indirekt mit der ersten Referenzstelle (7) verbindbar ist.

6. Messvorrichtung nach einem der Ansprüche 1 bis 5, **dadurch gekennzeichnet, dass** die Wegmesseinrichtung (2) in einem Gehäuse (21) angeordnet ist, in dem der Bügel (3) wenigstens abschnittsweise, insbesondere vollständig, aufgenommen ist, dass der Bügel (3) über die zweite Aufhängung (5) mit dem Gehäuse (21) verbunden ist, und dass das Gehäuse (21) mit der zweiten Referenzstelle (8) verbindbar ist, sodass die zweite Aufhängung (5) indirekt mit der zweiten Referenzstelle (8) verbindbar ist.

7. Messvorrichtung nach Anspruch 5 und 6, **dadurch gekennzeichnet, dass** der Bügel (3) vollständig im Gehäuse (21) aufgenommen ist, dass ein Innenraum des Gehäuses (21) nach außen hin schmutzdicht abgeschlossen ist, und dass zwischen dem Verbindungselement (22) und einer Öffnung (23) im Gehäuse (21), durch die das Verbindungselement (22) verschiebbar ist, eine Dichtung (24) angeordnet ist.

8. Messvorrichtung nach einem der Ansprüche 1 bis 7, **dadurch gekennzeichnet, dass** der Bügel (3) als Blattfeder ausgeführt ist, wobei die Aufhängungen (4, 5) vorzugsweise als gerollte bzw. gebogene Federaugen oder mit Durchgangslöchern, insbesondere Bohrungen, ausgeführt sind.

9. Messvorrichtung nach einem der Ansprüche 1 bis 8, **dadurch gekennzeichnet, dass** der Bügel (3) einstückig gefertigt ist oder aus mehreren miteinander, insbesondere gelenkig oder fest, verbundenen Teilstücken (58) zusammengesetzt ist.

10. Messvorrichtung nach einem der Ansprüche 1 bis 9, **dadurch gekennzeichnet, dass** die Messvorrichtung (1) eine mit der Wegmesseinrichtung (2) verbundene Steuerung (16) aufweist, die derart eingerichtet ist, dass sie den oder die Dehnmessstreifen (14) mit einer Messspannung versorgt und eine Widerstandsänderung des oder der Dehnmessstreifen (14) erfasst, sowie vorzugsweise wenigstens eine mit der Steuerung (16) verbundene Ausgabeeinrichtung (17) und/oder Sendeeinrichtung (19).

11. Fahrzeug (27), insbesondere Lastkraftwagen, mit einer Längsachse (L), wobei das Fahrzeug (27) ein um die Längsachse (L) verdrehbares Fahrgestell (28) und eine am Fahrgestell (28) gelagerte, im Wesentlichen drehsteife Auflagekonstruktion (29) aufweist, wobei die Auflagekonstruktion (29) in Richtung der Längsachse (L) gesehen an ihrem vorderen Ende (35) oder ihrem hinteren Ende (34) fest mit dem Fahrgestell (28) verbunden ist, wobei das Fahrgestell (28) eine Referenzstelle (7, 8) und die Auflagekonstruktion (29) eine weitere Referenzstelle (8, 7) aufweist, wobei sich die Referenzstellen (7, 8) bei einer Verdrehung des Fahrgestells (28), insbesondere um die Längsachse (L), voneinander weg oder zueinander hin bewegen, und wobei das Fahrzeug (27) eine Messvorrichtung (1) mit wenigstens einer Wegmesseinrichtung (2) aufweist, die mit der Referenzstelle (7, 8) des Fahrgestells (28) und der Referenzstelle (8, 7) der Auflagekonstruktion (29) verbunden ist und mit der eine Distanzänderung (ΔD) zwischen den Referenzstellen (7, 8) messbar ist, **dadurch gekennzeichnet, dass** die Messvorrichtung (1) eine Messvorrichtung (1) nach einem der Ansprüche 1 bis 10 ist.

12. Fahrzeug (27), insbesondere Lastkraftwagen, mit einer Längsachse (L), wobei das Fahrzeug (27) ein um die Längsachse (L) verdrehbares Fahrgestell (28) aufweist, wobei das Fahrgestell (28) eine erste Referenzstelle (7) aufweist, die sich bei einer Verdrehung des Fahrgestells (28), insbesondere um die Längsachse (L), von einer zweiten Referenzstelle (8) des Fahrgestells (28) weg oder zu dieser hin bewegt, und wobei das Fahrzeug (28) eine Messvorrichtung (1) mit wenigstens einer Wegmesseinrichtung (2) aufweist, die mit den Referenzstellen (7, 8) des Fahrgestells (28) verbunden ist und mit der eine Distanzänderung (ΔD) zwischen den Referenzstellen (7, 8) messbar ist, **dadurch gekennzeichnet, dass** die Messvorrichtung (1) eine Messvorrichtung (1) nach einem der Ansprüche 1 bis 10 ist.

13. Fahrzeug (27), insbesondere Lastkraftwagen, mit einer Längsachse (L), wobei das Fahrzeug (27) ein um die Längsachse (L) verdrehbares Fahrgestell (28), eine fest mit dem Fahrgestell (28) verbundene Auflagekonstruktion (29) und eine Fahrerkabine (40), der eine Vorderwand (41) der Auflagekonstruktion (29) zugewandt ist, aufweist, wobei die Fahrerkabine (40) eine Referenzstelle (7) und die Auflagekonstruktion (29) eine weitere Referenzstelle (8) aufweist, wobei sich die Referenzstellen (7, 8) bei einer Verdrehung des Fahrgestells (28), insbesondere um die Längsachse (L), voneinander weg oder zueinander hin bewegen, und wobei das Fahrzeug (27) eine Messvorrichtung (1) mit wenigstens einer Wegmesseinrichtung (2) aufweist, die mit der Referenzstelle (7) der Fahrerkabine (40) und der Referenzstelle (8) der Auflagekonstruktion (29) verbunden ist und mit der eine Distanzänderung (ΔD) zwischen den Referenzstellen (7, 8) messbar ist, **dadurch gekennzeichnet, dass** die Messvorrichtung (1) eine Messvorrichtung (1) nach einem der Ansprüche 1 bis 10 ist.

14. Fahrzeug (27), insbesondere Lastkraftwagen, mit einer Längsachse (L), wobei das Fahrzeug (27) ein um die Längsachse (L) verdrehbares Fahrgestell (28) und eine Fahrerkabine (40) aufweist, wobei das Fahrgestell (28) eine erste Referenzstelle (7) aufweist, die sich bei einer Verdrehung des Fahrgestells (28), insbesondere um die Längsachse (L), von einer zweiten Referenzstelle (8) der Fahrerkabine (40) weg oder zu dieser hin bewegt, und wobei das Fahrzeug (28) eine Messvorrichtung (1) mit wenigstens einer Wegmesseinrichtung (2) aufweist, die mit den Referenzstellen (7, 8) des Fahrgestells (28) und der Fahrerkabine (40) verbunden ist und mit der eine Distanzänderung (ΔD) zwischen den Referenzstellen (7, 8) messbar ist, **dadurch gekennzeichnet, dass** die Messvorrichtung (1) eine Messvorrichtung (1) nach einem der Ansprüche 1 bis 10 ist.

15. Fahrzeug nach einem der Ansprüche 11 bis 14, **dadurch gekennzeichnet, dass** die Messvorrichtung (1) derart angeordnet ist, dass damit eine Distanzänderung (ΔD) zwischen den Referenzstellen (7, 8) in vertikaler Richtung und/oder horizontaler Richtung messbar ist.
